(19) Europäisches Patentamt
European Patent Office
Office européen des brevets

(11) **EP 1 829 773 B1**

(12) **EUROPEAN PATENT SPECIFICATION**

(45) Date of publication and mention of the grant of the patent:
**03.04.2013 Bulletin 2013/14**

(21) Application number: **05811348.1**

(22) Date of filing: **30.11.2005**

(51) Int Cl.:
***B62D 55/20*** (2006.01) ***B62D 55/096*** (2006.01)

(86) International application number:
**PCT/JP2005/021958**

(87) International publication number:
**WO 2006/059624 (08.06.2006 Gazette 2006/23)**

(54) **CRAWLER BELT AND ASSEMBLY COMPRISING A SHOE PLATE AND A PAIR OF TRACK LINKS FOR SUCH A CRAWLER BELT**

RAUPENKETTE UND LAUFFLÄCHENPLATTE UND KETTENGELENKPAAR FÜR EINE SOLCHE RAUPENKETTE

COURROIE DE CHENILLE ET ASSEMBLAGE D'UN PLAQUE DE SEMELLE ET DES MAILLONS DE CHENILLE POUR UNE TELLE COURROIE DE CHENILLE

(84) Designated Contracting States:
**DE FR IT**

(30) Priority: **01.12.2004 JP 2004348900**

(43) Date of publication of application:
**05.09.2007 Bulletin 2007/36**

(73) Proprietor: **Komatsu Ltd.**
**Minato-ku**
**Tokyo 107-8414 (JP)**

(72) Inventors:
- **KURE, Kazuki**
**Hirakata-shi,**
**Osaka 5731011 (JP)**
- **IBUKI, Toshio**
**Hirakata-shi,**
**Osaka 5731011 (JP)**
- **YAMAMOTO, Teiji**
**Hirakata-shi,**
**Osaka 5731011 (JP)**
- **TAMARU, Masatake,**
**KOMATSU LTD.**
**Hiratsuka-shi,**
**Kanagawa 2548567 (JP)**

(74) Representative: **Smee, Anthony James Michael**
**Gill Jennings & Every LLP**
**The Broadgate Tower**
**20 Primrose Street**
**London EC2A 2ES (GB)**

(56) References cited:
**JP-A- 2000 219 168**
**JP-A- 2002 321 669**
**JP-A- 2002 321 670**
**JP-A- 2002 337 765**
**JP-A- 2003 011 861**
**JP-U- 53 165 446**
**US-A- 4 014 581**
**US-A- 4 099 796**
**US-B1- 6 332 509**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 829 773 B1

**Description**

TECHNICAL FIELD

The present invention relates to a crawler belt and a shoe plate for the crawler belt.

BACKGROUND ART

Some work machines such as a crawler dozer include a crawler belt wound around a driving wheel and an idle wheel. The crawler belt includes a plurality of track links connected to each other in a looped manner, a shoe plate connected to the track links and the like. The crawler belt is driven by a rotation of the driving wheel to travel around an outer circumference of the driving wheel and the idle wheel, thereby moving the work machines.
When such work machines are moving, the crawler belt collides with the driving wheel and the idle wheel and with the ground, generating collision noise (acceleration noise) or wringing noise (noise caused by natural oscillation of the shoe plate and the like).
To solve the problem, a technology has been suggested (see, for example, Patent Document 1).
In the technology disclosed in Patent Document 1, a plurality of general steel plates are discretely laminated by plug welding on the opposite side of a grounded side of the shoe plate. In such an arrangement, when the crawler belt collides with the driving wheel or the idle wheel, oscillation energy of the shoe plate generated in the collision is dissipated through friction or collisions among the general steel plates, thereby reducing the noise.
[Patent Document 1] JP-A-200-219168

DISCLOSURE OF THE INVENTION

PROBLEMS TO BE SOLVED BY THE INVENTION

However, in the technology disclosed in Patent Document 1, since the plurality of general steel plates are connected to the shoe plate by plug welding, a process for welding the general steel plates is necessary in manufacturing the shoe plate. Accordingly, it is difficult to satisfy a fundamental requirement of reducing manufacturing cost.
Additionally, when replacing the shoe plate due to wear and the like of the shoe plate, it is also difficult to re-use the general steel plates. Hence, new general steel plates are necessary for each replacement of the shoe plate, so that herein it is also difficult to reduce the manufacturing cost.
Further, in the technology disclosed in Patent Document 1, since the plurality of general steel plates are connected to the shoe plate by plug welding, the general steel plates are restrained to each other at the connecting portion, the friction effects which can be obtained by relative movements among the general steel plates are reduced, so that the oscillation energy cannot be effectively absorbed.
An object of the invention is to provide a crawler belt that allows re-use of components and improves noise reduction effects in damping.
US-B1-6332509 and JP 200219168 disclose a crawler belt, comprising: track links connected in a looped manner; and shoe plates connected to the track links, wherein the crawler belt is to be wound around a driving wheel and an idle wheel of a traveling device, wherein the shoe plates each include: a shoe plate main body formed in a plate shape that extends in a width direction orthogonal to a connecting direction of the track links, the shoe plate main body having a connecting surface on which the track links are connected, the connecting surface located at a substantially central portion of the shoe plate main body; a damping member that includes laminated plates laminated on the connecting surface and a retainer plate provided on the laminated plates; and fastening members that fasten the shoe plate main body, the laminated plates and the retainer plate while holding the laminated plates in a mutually separatable state and wherein the track links and the shoe plate main body are connected by the screw member penetrating the track links and the shoe plate main body.
The present invention is defined by a crawler belt as set out in claim 1 and an assembly as set out in claim 5.
The fastening members may be any arrangement as long as the laminated plates can be slid from each other and the oscillation energy from the shoe plate which accompanies the collision can be eliminated through the friction. For example, an arrangement in which holes are formed in advance in the laminated plates in accordance with positions of the fastening members and screw members such as bolts and nuts, riveting members such as a rivet and the like are inserted therethrough for the fastening. Another arrangement may be employed in which bosses are formed in advance on the shoe plate main body. The bosses are inserted in the holes formed in the laminated plates and tip ends of the bosses are welding-connected to the retainer plate.

As a second aspect of the invention, in the crawler belt in the first aspect of the invention, the first fastening members may be screw members that include an external thread penetrating the shoe plate main body, the laminated plates and the retainer plate and an internal thread screwed with the external thread; and the shoe plate main body, the laminated plates and the retainer plate may be provided with through holes at positions in which the screw members penetrate, the through holes having a larger diameter than that of the external thread.
As a third aspect of the invention, in the crawler belt according to the first aspect of the invention, the first fastening members may be disposed on an axis line extending along a width direction end of the laminated plate and on axis lines extending so as to substantially equally partition the laminated plate in a width direction into three parts.
As a fourth aspect of the invention, in the crawler belt according to the third aspect of the invention, the first fastening members may be disposed on a substantially central portion in the connecting direction of the shoe plate main body and on a center axis line extending in the width direction of the shoe plate main body.
The assembly according to any one of the fifth to eighth aspects can be implemented in combination with the first to fourth aspects and may be a part of the first to fourth aspects of the invention.

EFFECT OF THE INVENTION

According to the first aspect of the invention, since the laminated plates of the damping member are held by the fastening members in a mutually slidable manner, the oscillation energy generated in the shoe plate can be effectively dissipated by the friction or collisions in the relative movements of the laminated plates, thereby reducing noise. In addition, since the laminated plates are not connected by welding or the like, when the shoe plate is replaced due to wear of the shoe plate, the laminated plates can be easily removed and provided for re-use.
According to the second aspect of the invention, since screw members are employed as the fastening members, the assembling of the damping member can be simplified and the mobility of the laminated plates can be freely adjusted by adjusting the fastening torque.
According to the first aspect of the invention, since the laminated plates and the retainer plate are each formed by a plate body having a length that extends from a position near one end in a width direction of the shoe plate main body to a position near the other end, the plate body being symmetric about a connecting position of the shoe plate main body to the track links; sufficient damping effects that large laminated plates can provide can be expected; and the number of fastening positions of the damping member to the shoe plate main body can be reduced, thereby simplifying the structure of the damping member.
According to the first aspect of the invention, since the spacers having a larger thickness than that of the damping member are provided on the connecting positions between the track links and the shoe plate main body, force applied on the track links is prevented from being applied on the damping member such that the laminated plates of the damping member are not restrained at the connecting positions, thereby reliably maintaining the damping effects of the laminated plates.
According to the third aspect of the invention, since the plurality of fastening members are disposed on an axis line along a width direction end of the laminated plate and on axis lines which substantially equally partitioning the width direction of the laminated plate into three parts, the damping member can be attached on the shoe plate main body by minimum fastening, thereby avoiding a reduction in the damping effects.
According to the fourth aspect of the invention, since the damping member is fixed by the fastening members substantially at the middle in the connecting direction of the shoe plate main body, flexibility in movement of the laminated plates of the damping member is improved, thereby further enhancing the damping effects.
According to the fifth to eighth aspects of the invention, even when the shoe plate main body needs to be replaced due to wear, the crawler belt can be easily restored to a state in which the crawler belt has original damping effects only by exchanging the whole shoe plate on which the damping member is provided.

BRIEF DESCRIPTION OF DRAWINGS

Fig. 1 is a perspective view showing a structure of a crawler belt according to the invention;
Fig. 2 is an exploded perspective view showing an arrangement of the crawler belt of the first comparative example;
Fig. 3 is a plan view showing a shoe plate of the first comparative example;
Fig. 4 is a side view showing the shoe plate of the first comparative example;
Fig. 5 is a cross section showing an arrangement of a damping member of the first comparative example;
Fig. 6 is a perspective view showing a structure of a crawler belt according to a second comparative example not forming part of the invention;
Fig. 7 is a plan view showing a shoe plate of the second comparative example;

Fig. 8 is an exploded perspective view showing a structure of a crawler belt according to a third comparative example not forming part of the invention;
Fig. 9 is a plan view showing a modification according to the first comparative example;
Fig. 10 is a plan view showing a dimension of a shoe plate main body used in examples;
Fig. 11 is a plan view showing a dimension of a laminated plate used in the examples;
Fig. 12 is a plan view showing a dimension of a retainer plate used in examples;
Fig. 13 is a plan view and a side view showing a dimension of a spacer used in the examples;
Fig. 14 is a plan view showing a dimension of a shoe plate main body and a damping member used in the examples not forming part of the invention;
Fig. 15 is a plan view showing a dimension of a shoe plate main body and a damping member used in the examples;
Fig. 16 is a side view schematically showing an arrangement of a damping noise testing device used in a damping measurement and a noise measurement;
Fig. 17A is a graph showing change in time of a vibration acceleration according to a first example;
Fig. 17B is a graph showing a result of 1/3 octave-band analysis in the first example;
Fig. 18A is a graph showing change in time of a vibration acceleration according to a second example;
Fig. 18B is a graph showing a result of 1/3 octave-band analysis in the second example;
Fig. 19A is a graph showing change in time of a vibration acceleration according to a third example;
Fig. 19B is a graph showing a result of 1/3 octave-band analysis in the third example;
Fig. 20A is a graph showing change in time of a vibration acceleration according to a fourth example;
Fig. 20B is a graph showing a result of 1/3 octave-band analysis in the fourth example;
Fig. 21A is a graph showing change in time of a vibration acceleration according to a fifth example;
Fig. 21B is a graph showing a result of 1/3 octave-band analysis in the fifth example;
Fig. 22A is a graph showing change in time of a vibration acceleration according to a sixth example;

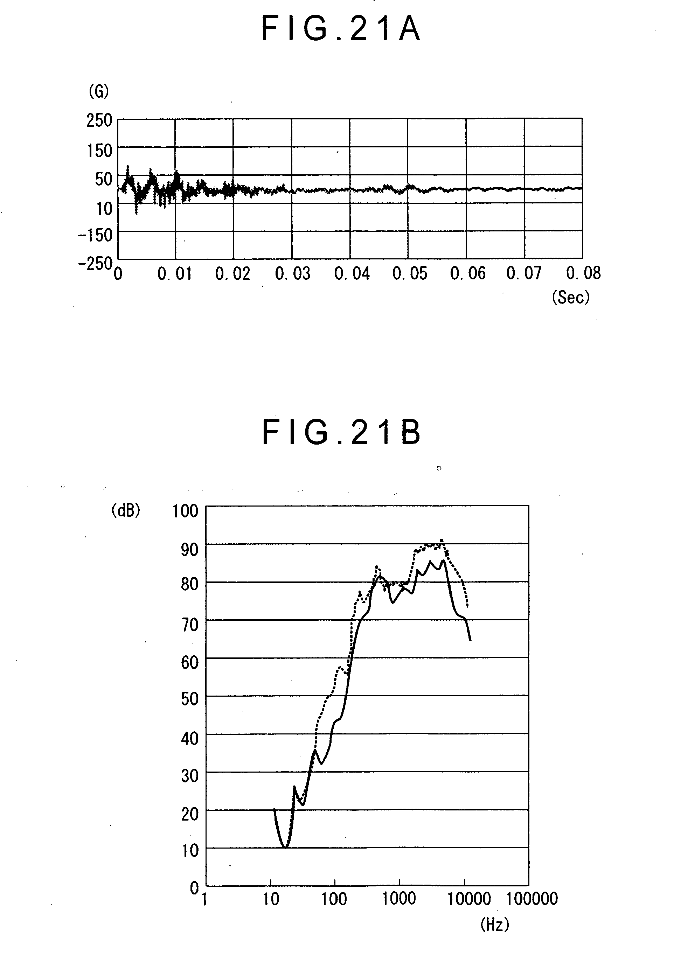

Fig. 21B is a graph showing a result of 1/3 octave-band analysis in the sixth example;

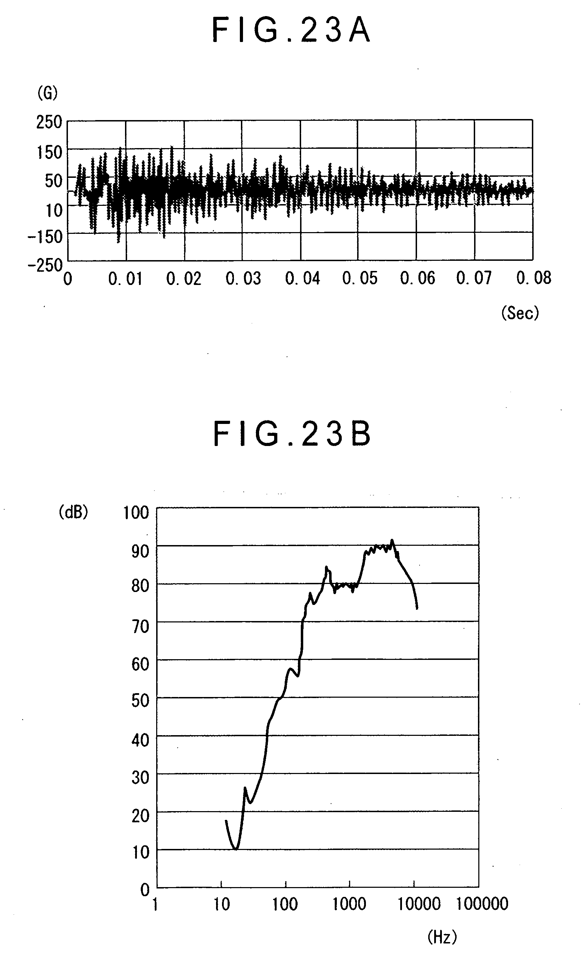

Fig. 23A is a graph showing change in time of a vibration acceleration according to a first comparison;
Fig. 23B is a graph showing a result of 1/3 octave-band analysis in the first comparison;

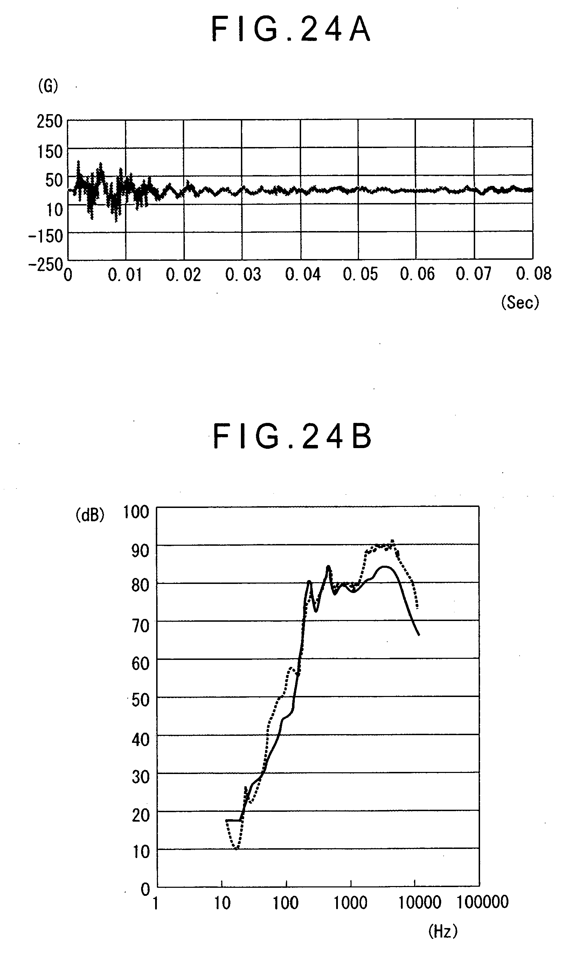

Fig. 24A is a graph showing change in time of a vibration acceleration according to a second comparison;
Fig. 24B is a graph showing a result of 1/3 octave-band analysis in the second comparison;

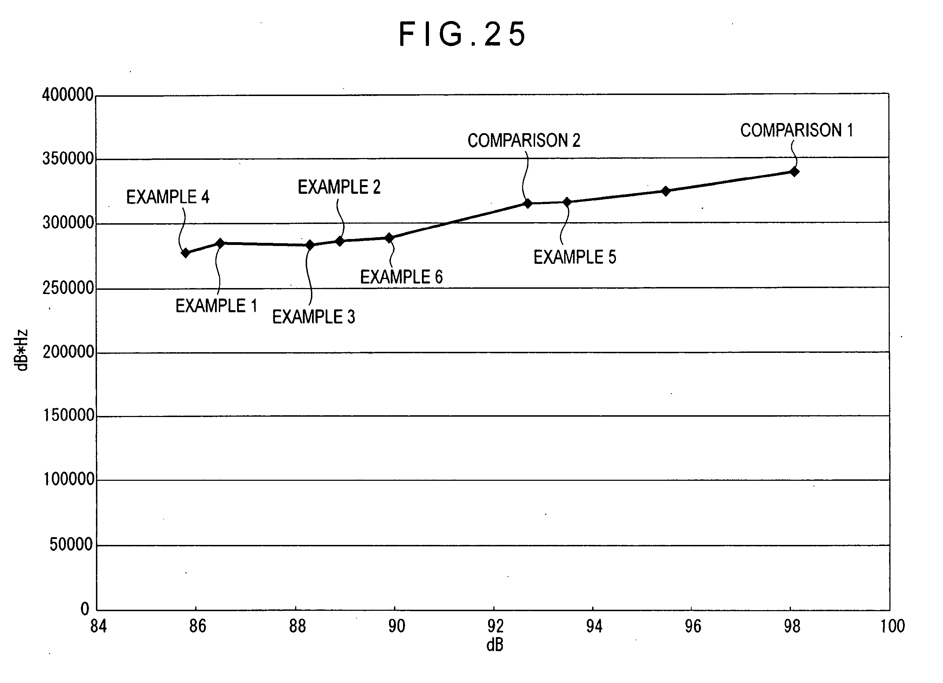

Fig. 25 is a graph showing a comparison in total noise level in frequency bands of the examples and the comparisons; and

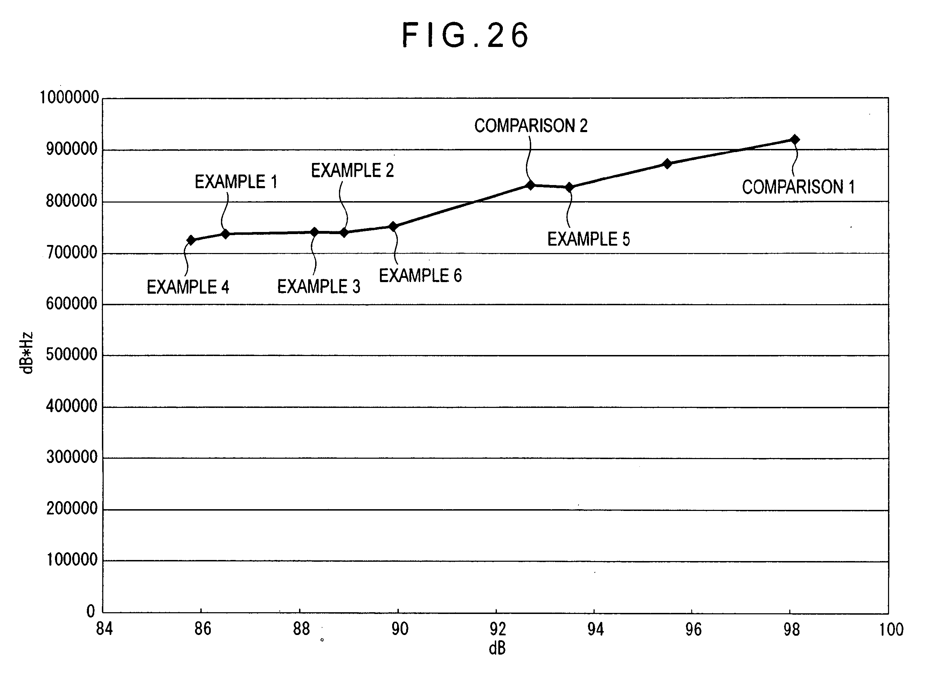

Fig. 26 is a graph showing a comparison in total noise level in frequency bands of the examples and the comparisons.

EXPLANATION OF CODES

1: crawler belt
2: track link
3, 3A, 3B, 3C: shoe plate
6: fastening member
31: shoe plate main body
31B: connecting surface
32: abutting portion
33, 33A, 33B: damping member
330: opening
331: laminated plate
332: retainer plate
A1, A2, A3, A4, CA, CB: axis line
CA: center axis line
P1, P2, P3, P4, P5, P6, P7, P1A, P2A, P3A, P4A, P5A, P6A, P7A: connecting position

BEST MODE FOR CARRYING OUT THE INVENTION

[First Example]

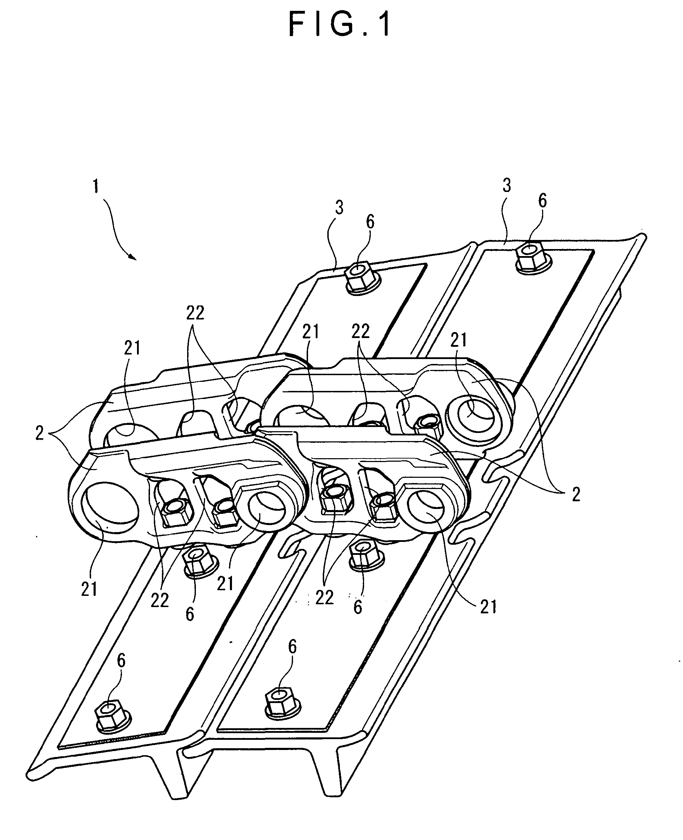

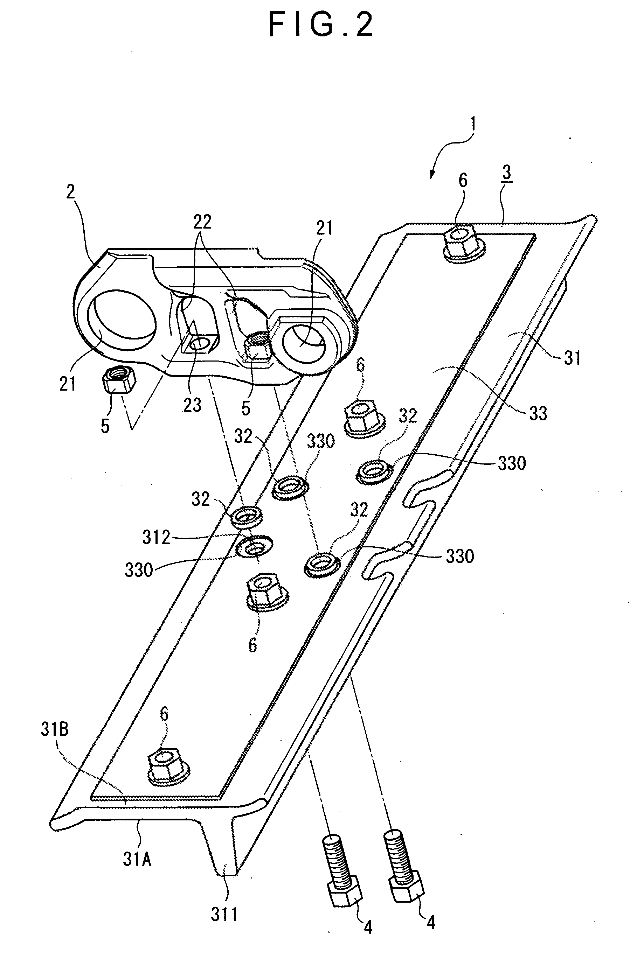

A first comparative example will be described below with reference to the drawings. Fig. 1 is, a perspective view showing a structure of a crawler belt according to the invention. Fig. 2 is an exploded perspective view showing an arrangement of the crawler belt.

A crawler belt 1 is used on an undercarriage of a work machine such as a crawler dozer. The crawler belt 1 is wound over a driving wheel and an idle wheel (both not shown) to be driven by a rotation of the drive wheel, the crawler belt 1 traveling around an outer circumference of the driving wheel and the idle wheel, thereby moving a construction equipment. As shown in Figs. 1 and 2, the crawler belt 1 includes a pair of track links 2, a shoe plate 3 and the like.

The pair of track links 2 have a substantially rectangular parallelepiped shape extending in a traveling direction of the crawler belt 1 (the right - left direction in Figs. 1 and 2). The track links 2 are disposed so as to face each other in a width direction orthogonal to the traveling direction of the crawler belt 1 (the right - left direction in Figs. 1 and 2). As shown in Fig. 1, the pair of track links 2 is connected in a bendable manner with an adjacent pair of track links 2 aligned in the traveling direction of the crawler belt 1 by a bushing and a connecting pin (both not shown). Pairs of track links 2 aligned in the traveling direction of the crawler belt 1 are thus connected to each other to form a looped track chain.

As shown in Figs. 1 and 2, the track link 2 has circular holes 21 in one end and the other end in a longitudinal direction of the track link 2, the circular holes 21 being open in a direction orthogonal to the traveling direction. Two pairs of track links 2 next to each other are connected by the bushing and the connecting pin via the circular holes 21.

As shown in Figs. 1 and 2, substantially at the middle of the track link 2 in the longitudinal direction, two openings 22 are formed so as to be open in the same direction as the circular holes 21, the openings 22 aligned in the traveling direction of the crawler belt 1 in parallel to each other. In each lower side surface of the openings 22 (i.e. in a surface on a connecting side with the shoe plate 3), a through hole 23 (Fig. 2) is formed so as to penetrate to a lower side end of the track link 2, the through holes 23 displaced from each other in a direction orthogonal to the longitudinal direction.

The shoe plate 3 is a member that is connected with the pair of track links 2 and engaged with ground when the work machine travels. As shown in Fig. 2, the shoe plate 3 includes a shoe plate main body 31, abutting portions 32, a damping member 33 and fastening members 6.

As shown in Fig. 2, the shoe plate main body 31 is formed by a plate having a substantially rectangular shape in plan view in which, as compared with a length dimension in a connecting direction of the pairs of track links 2, a length dimension in a width direction orthogonal to the connecting direction is larger. Ends of the shoe plate main body 31 in the traveling direction bend upward and downward, respectively. When the crawler belt 1 is assembled, the adjacent shoe plates 3 are disposed with bending portions of the shoe plate main bodies 31 overlapped.

As shown in Fig. 2, a lower side of the shoe plate main body 31 serves as a ground engaging surface 31A and a flat portion on an upper side of the shoe plate main body 31 serves as a connecting surface 31B for connection with the track link 2.

As shown in Fig. 2, on the ground engaging surface 31A of the shoe plate main body 31, a grouser 311 is formed so as to project in an out-plane direction and extend in a direction orthogonal to the traveling direction of the crawler belt 1. The grouser 311 is for avoiding a slip in traveling and thereby raising the traction force.

As shown in Fig. 2, in the connecting surface 31B of the shoe plate main body 31, four through holes 312 are formed substantially at the middle in the longitudinal width direction, the through holes 312 respectively corresponding to the through holes 23 of the pair of track links 2. Bolts 4 are inserted into the through holes 312 from a lower side; and nuts 5 provided on the openings 22 of the track links 2 are screwed on the bolts 4, thereby connecting the shoe plate main body 31 to the track links 2.

As shown in Fig. 2, connecting positions between the shoe plate main body 31 and the track links 2 are provided with spacers 32. The spacers 32 each have a cylindrical shape in which the bolt 4 can be inserted, the spacers 32 disposed on circumferential portions of the through holes 312 of the connecting surface 31B of the shoe plate main body 31. The spacers 32 are formed to have a larger height dimension in an axial direction of the cylindrical shape than a thickness dimension of the later described damping member 33. When the crawler belt 1 is assembled, the track links 2 only abut on the spacers 32.

The damping member 33 is provided on the connecting surface 31B of the shoe plate main body 31.

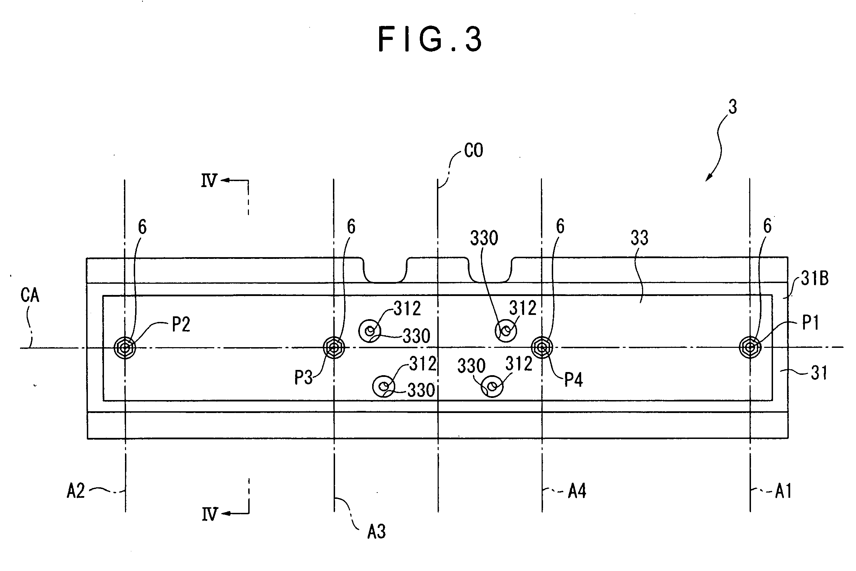

As shown in Fig. 3, the damping member 33 has a contour dimension substantially equal to or slightly smaller than that of the connecting surface 31B of the shoe plate main body 31. The damping member 33 is fixed on the shoe plate main body 31 1 by the fastening members 6 provided on intersections of a center axis CA (extending in the width direction of the shoe plate main body 31 substantially at the middle in a connecting direction of the shoe plate main bodies 31) with axis lines A1, A2 (extending in parallel to the connecting direction of the shoe plate main bodies 31 near ends of the damping member 31) and axis lines A3, A4 (extending in parallel to the connecting direction and substantially equally partitioning the damping member 31 into three parts in the width direction).

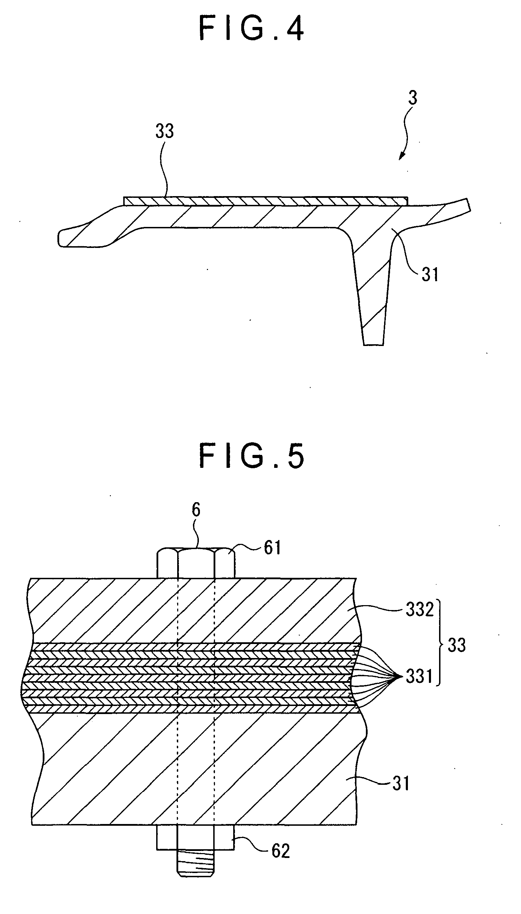

As shown in Fig. 4, the damping member 33 is provided on an upper surface of the shoe plate main body 31, namely on an opposite surface of a ground engaging surface of the shoe plate 3. As shown in Fig. 5, the damping member 33 includes a plurality of laminated plates 331 and a retainer plate 332 covering an upper portion of the laminated plates 331.

The laminated plates 331 are each formed by a general steel plate having a thickness of 0.6 mm. In the first embodiment, nine laminated plates 331 are laminated to form the damping member 33.

The retainer plate 332 is formed by a general steel plate having a thickness of 4.5 mm, the retainer plate 332 covering an uppermost portion of the laminated plates 331. Note that such general steel plates are employed as the laminated plates 331 and the retainer plate in the first embodiment, but the arrangement is not limited thereto. Aluminum alloy, stainless steel, FRP (Fiber Reinforced Plastics) and the like can be alternatively employed.

As shown in Fig. 5 (a cross section taken along line IV - IV in Fig. 3), the fastening member 6 includes a bolt 61 and a nut 62. The bolt 61 penetrates the damping member 33 and the nut 62 is screwed on a tip end of the bolt 61, thereby fixing the damping member 33 on the shoe plate main body 31.

Although omitted in Figs. 3 and 4, the above described laminated plates 331 and the retainer plate 332 are provided with holes into which the bolts are inserted at positions on which the fastening members 6 are disposed, the holes having a slightly larger diameter than that of the bolt 61. Accordingly, even when fastened by the fastening members 6, the laminated plates 331 can be displaced from each other in a sliding direction on the shoe plate main body 31.

As shown in Fig. 3, the damping member 33 is attached on the shoe plate main body 31 by the fastening members 6, the fastening members 6 being disposed on the center axis line CA extending in the width direction substantially at the middle of sides of the shoe plate main body 31 which extend along the connecting direction of the track links 2, the fastening members 6 being symmetrically disposed about a center axis line CO set substantially at the middle of the width direction of the crawler plate main body 3.

As shown in Figs. 2 and 3, the damping member 33 is provided with four openings 330 corresponding to the through holes 312 formed in the connecting surface 31B of the shoe plate main body 31. The above described cylindrical spacers 32 are inserted into the openings 330.

As stated above, in the first comparative example, since the plurality of laminated plates 331 are bolted in a laminated manner on the connecting surface 31B of the shoe plate main body 31, when the crawler belt 1 collides with the driving wheel, the idle wheel or the like, oscillation energy of the shoe plate main body 31 generated by a shock of the collision is converted into heat energy through friction or collisions among the plurality of laminated plates 331 to be dissipated. Accordingly, noise can be reduced.

Since the shoe plate 3 can be assembled only by bolt-fastening the plurality of laminated plates 331 on the shoe plate main body 31, a related-art welding process of the plurality of laminated plates on the shoe plate main body can be omitted, thereby reducing manufacturing cost.

When the shoe plate 3 is replaced due to wear or the like of the ground engaging surface 31A side, the plurality of laminated plates 331 can be re-used only by removing the fastening members 6, thereby reducing operation cost.

Since the shoe plate main body 31 and the plurality of laminated plates 331 are adapted to have fastening positions P1, P2, P3, P4 that are set symmetric about the center axis line CO passing a middle position in the width direction of the shoe plate main body 31, the center axis line CO extending in parallel to the traveling direction, the connecting positions P1, P2 and the connecting positions P3, P4 become incident on outer sides in the width direction of the pair of track links 2, thereby simplifying the arrangement as compared with the related art.

Note that, when the fastening positions P1, P2, P3, P4 are respectively set on first, second, third and fourth axis lines A1, A2, A3, A4, the axis lines A3, A4 passing partitioning positions that substantially equally partition the width direction of the first and second axis lines A1, A2 into three parts, a connecting state of the shoe plate main body 31 with the damping member 33 can be appropriately maintained and the oscillation energy of the shoe plate main body 31 can be efficiently dissipated, thereby appropriately reducing noise.

Since the fastening positions P1, P2, P3, P4 are set only on the center axis line CA passing a substantially middle position in the connecting direction of the track links 2 of the shoe plate main body 31 and extending in the width direction, the damping member 33 can be fastened with the shoe plate main body 31 only by four connecting points, thereby facilitating the attachment of the damping member 33 on the shoe plate main body 31.

Further, by providing four connecting points, the strength of the shoe plate main body 31 can be appropriately maintained and deterioration of or damage on the shoe plate 3 can be avoided, thereby increasing a life of the shoe plate 3.

Since the spacers 32 are interposed between the shoe plate main body 31 and the track links 2, it is possible to provide a structure in which force from the track links 2 is not applied on the damping member 33 when the damping member 33 is connected with the track links 2, thereby avoiding deterioration of or damage on the plurality of laminated plates 331 caused by the track links 2. Accordingly, the damping member 33 will not be disengaged from the shoe plate main body 31 or the fastening members 6 will not loosen so as not to press the damping member 33 at a predetermined suppress strength. Hence, noise reduction effect of the damping member 33 can be appropriately maintained. Since the strength of the damping member 33 needs not be so high, a general and low-cost steel plate or the like can be employed, thereby reducing cost of the shoe plate 3.

Such a structure enables the damping member 33 to have the substantially same contour dimension as that of the connecting surface 31B only by providing the openings 330 for allowing the spacers 32 to be inserted in the damping member 33. Hence, the damping member 33 can be disposed in the vicinity of the connecting positions between the shoe plate main body 31 and the track links 2, so that the oscillation energy in the vicinity of the connecting positions can be effectively dissipated, thereby further reducing the noise.

Further, since the damping member 33 includes the retainer plate 332, the suppress strength by the bolt-fastening is not directly applied on the plurality of the laminated plates 331. By providing the retainer plate 332, the suppress strength by the bolt-fastening can be uniformly applied on the plurality of the laminated plates 331. Hence, it is possible to avoid deformation of the plurality of laminated plates 331 or deterioration in a portion of the laminated plates 331 which abuts to the bolt 6; and the oscillation energy of the shoe plate main body 31 can be effectively dissipated by the plurality of laminated plates 331, thereby appropriately reducing the noise. By providing the retainer plate 332, it is also possible to avoid warpage or deformation of an uppermost laminated plate 331 of the plurality of laminated plates 331.

[Second Comparative Example (not part of the invention)]

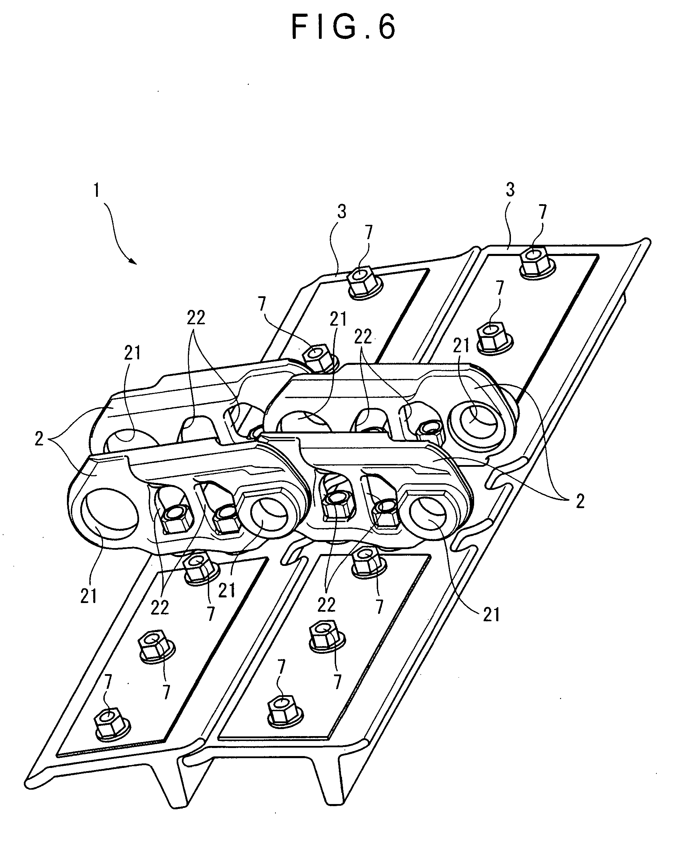

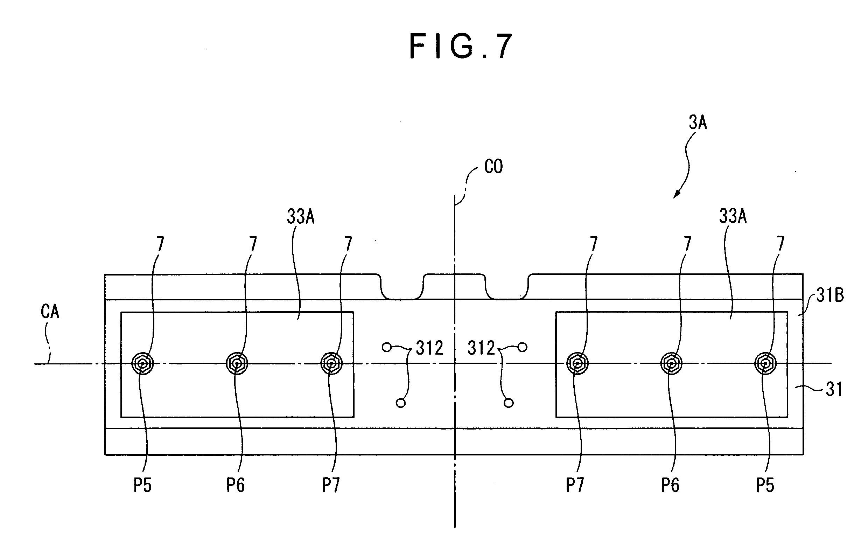

Next, a second comparative example will be described below with reference to the drawings.
In the description below, the same structures and components as those in the first comparative example will be given the same reference numerals to omit or simplify detailed explanation.
In the first comparative example, the laminated plates 331 and the retainer plate 332 are each formed by a single piece plate having a dimension enough to reach both ends of the shoe plate main body 31 in the width direction; and the damping member 33 is interposed on the connecting positions between the shoe plate main body 31 and the track links 2.
In contrast, as shown in Fig. 6, the second comparative example differs in that a pair of damping members 33A, 33A aligned in the width direction are provided at positions while avoiding the connecting positions between the shoe plate main body 31 and the track links 2. Accordingly, the second comparative example is also different from the first comparative example in fastening positions by the fastening members 6.
As shown in Fig. 6, the damping members 33A each have a rectangular shape in plan view; and when a crawler belt 1A is assembled, the damping members 33A are disposed on the outer sides of the track links 2 (Fig. 1 or Fig. 2) in the width direction such that ends of the damping members 33A do not interfere with the track links 2. As shown in Fig. 7, the damping members 33A, 33A are disposed line-symmetrically about the center axis line CO passing a middle position in the width direction orthogonal to the traveling direction of a shoe plate 3A.
In addition, in the second comparative example, since the damping members 33A are not interposed between the track links 2 and the shoe plate main body 31, the spacers 32 described in the first comparative exampleare omitted. Hence, in the second embodiment, the track links 2 directly abut on the connecting surface 31B of the shoe plate main body 31 when the crawler belt 1A is assembled.
Note that although the arrangement of the damping members 33A is not specifically shown, the damping members 33A each include the plurality of laminated plates 331 and the retainer plate 332 similarly to the damping member 33 in the first comparative example.
As shown in Fig. 7, the damping members 33A are each fastened by three fastening members 7.
Specifically, as shown in Fig. 7, the shoe plate main body 31 and the damping member 33A are fastened by the three fastening members 7 at three fastening positions P5, P6, P7 that are disposed on the center axis line CA passing a substantially middle position of ends of the shoe plate 3A, the ends extending in the connecting direction of the track links 2, and are disposed at positions equally spaced in the width direction of the damping member 33A. Also in the second embodiment, the fastening positions P5, P6, P7 are symmetric about the center axis line CO as in the first comparative example.
As stated above, in the second comparative example, since the damping members 33A are disposed on the outer sides in the width direction of the track links 2 on the connecting surface 31B of the shoe plate main body 31, it is possible to easily realize, without using an extra member such as the spacers, a structure in which force from the track links 2 is not applied on the damping members 33A even when the shoe plate main body 31 is connected with the track links 2. Hence, as compared with the first comparative example, the shoe plate 3A can be more easily manufactured and the manufacturing cost can be reduced.

[Third Comparative Example (not part of the invention)]

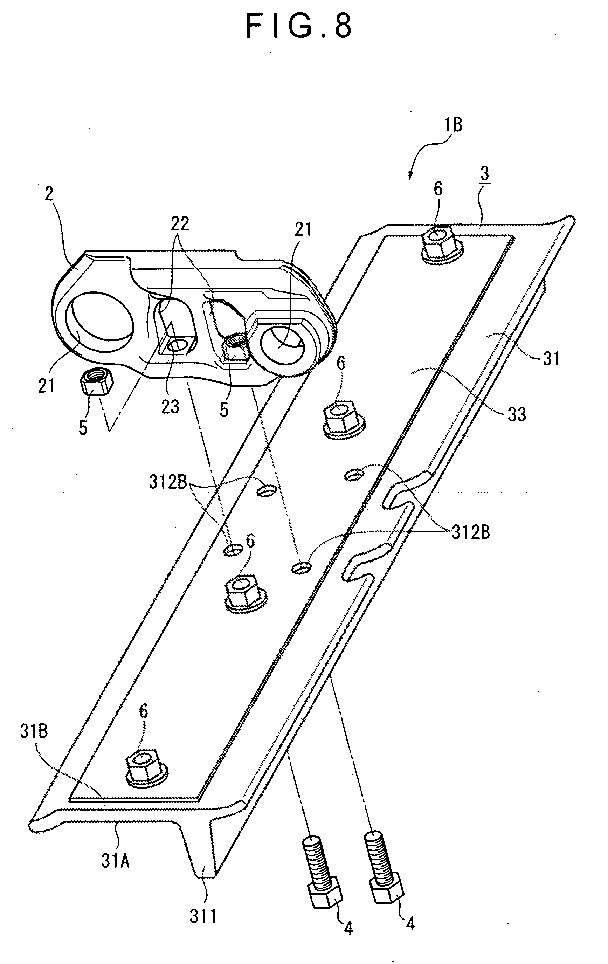

Next, a third comparative example will be described below.
In the first comparative example, the spacers 32 are interposed on inserting positions of the bolts 4 that connect the track links 2 with the shoe plate main body 31 such that force is not applied on the damping member 33.
In contract, as shown in Fig. 8, a crawler belt 1B of the third comparative example differs in that no spacer is provided. Specifically, the damping member 33 is disposed on the connecting positions between the shoe plate main body 31 and the track links 2; and the damping member 33 is provided with four holes 312B in which the bolts 4 are inserted to be screwed with the nuts 5, thereby connecting the shoe plate main body 31 and the track links 2.
The holes 312B is formed to have a diameter slightly larger than that of the bolts 4 such that the laminated plates of the damping member 33 are slidable in this range even when the bolts 4 and the nuts 5 are fastened by a predetermined torque.
Thus, even in the crawler belt 1B equipped with no spacer, the same effects and advantages can be obtained as in the first comparative examplealthough not at the same level as that in the first comparative example.

The other features are the same as the first comparative example, so that description thereof is omitted herein.

[Modifications of Comparative Examples]

Note that the invention is not limited to the above but may also contain, within the scope of the attached claims, another arrangement or the like as long as an object of the invention can be obtained such as modifications described below.

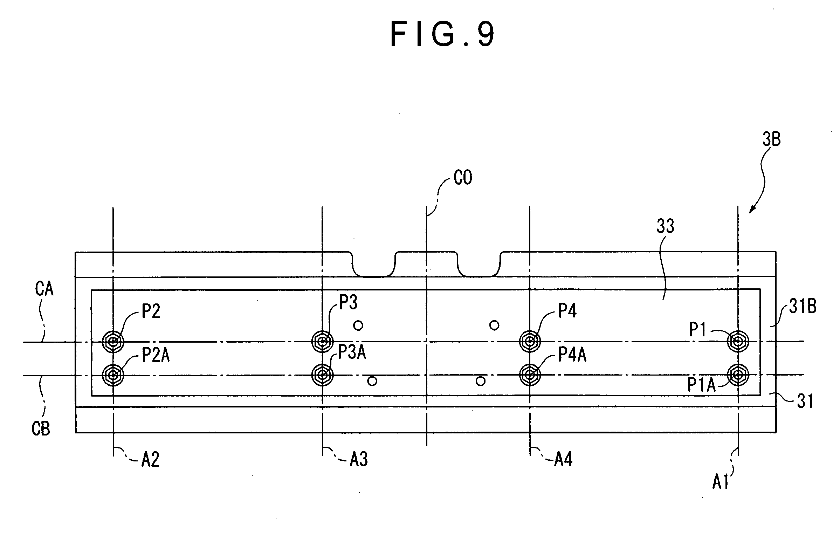

Fig. 9 shows a modification of the first example of the invention. The fastening positions between the shoe plate main body 31 and the damping member 33 in the first comparative example are not limited to the fastening positions P1, P2, P3, P4 described in the first comparative example. For example, the fastening may be conducted at fastening positions on a shoe plate 3B shown in Fig. 9.
Specifically as shown in Fig. 9, in the shoe plate 3B, the shoe plate main body 31 and the damping member 33 are fastened at the fastening positions P1, P2, P3, P4 and at fastening positions P1A, P2A, P3A, P4A on which the first, second, third and fourth axis lines A1, A2, A3, A4 intersect with an axis line CB that is in parallel to the center axis line CA and is disposed on one end side of the shoe plate 3B in the traveling direction. Also in such an arrangement, the fastening positions P1, P2, P3, P4, P1A, P2A, P3A, P4A are symmetric about the center axis line CO that passes a middle position in the width direction orthogonal to the traveling direction and extends in parallel to the traveling direction, as in the first comparative example.
As stated above, the fastening positions between the damping member and the shoe plate main body only need to be set symmetric about the center axis line that passes a middle position in the width direction orthogonal to the traveling direction of the shoe plate and extends in parallel to the traveling direction.
In the modification shown in Fig. 9, when the fastening positions are set on at least two axis lines orthogonal to the traveling direction of the shoe plate, it is possible to appropriately maintain a fastening state of the plurality of laminated plates 331 to the shoe plate main body 31 and to avoid warpage or deformation of an uppermost laminated plate 331, so that the retainer plate 332 may be omitted.
Additionally, although the best mode, method and the like for implementing an aspect of the invention are disclosed above, the scope of the invention is not limited thereto. Specifically, although the invention is illustrated and described by exemplifying a specific comparative example, a skilled person in the art can modify the above-described comparative examples in shapes, numbers and quantities and other detail arrangements without departing from the scope of the invention which is defined by the attached claims.
Therefore, the above-disclosed description including limitation on shapes, numbers and quantities and the like is one example for facilitating the understanding of the invention but not for narrowing the scope of the invention, which is defined by the attached claims.

[Examples]

Results from experiments conducted under varied conditions will be described below to confirm some advantages.

[Example 1 to Example 4]

In Examples 1 to 4, the arrangement of the damping member, which corresponds to that in the first and third comparative examples, was modified in the fastening positions on which the fastening members are fastened to the shoe plate, the specification of the fastening members and the like.

(1) Dimensional Specification of Shoe Plate Main Body 31

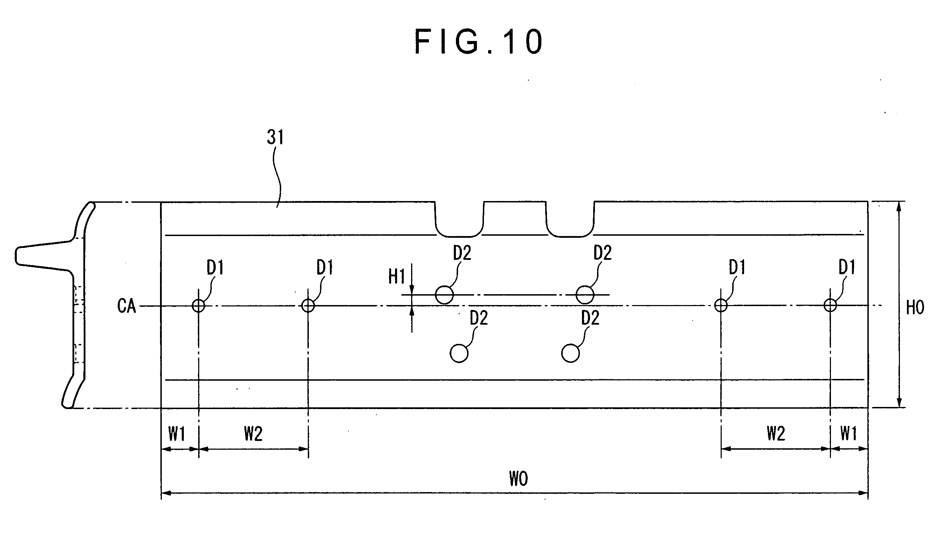

As shown in Fig. 10, the shoe plate main body 31 had a width dimension W0 (= 910 mm) and a length dimension H0 (= 248 mm). As positions on which the damping member is fixed by the fastening members, two positions were set with a hole diameter D1, the positions respectively being apart by dimensions W1, W2 from the ends in the width direction of the shoe plate main body 31. The holes for fixing a connecting member were formed on the center axis CA passing at the middle of the shoe plate main body 31 in the connecting direction of the track links. As the connecting positions of the shoe plate main body 31 to the track links, holes having a hole diameter D2 were provided so as to be offset from the center axis CA by H1 (= 13.4 mm).

(2) Dimensional Specification of Laminated Plate 331

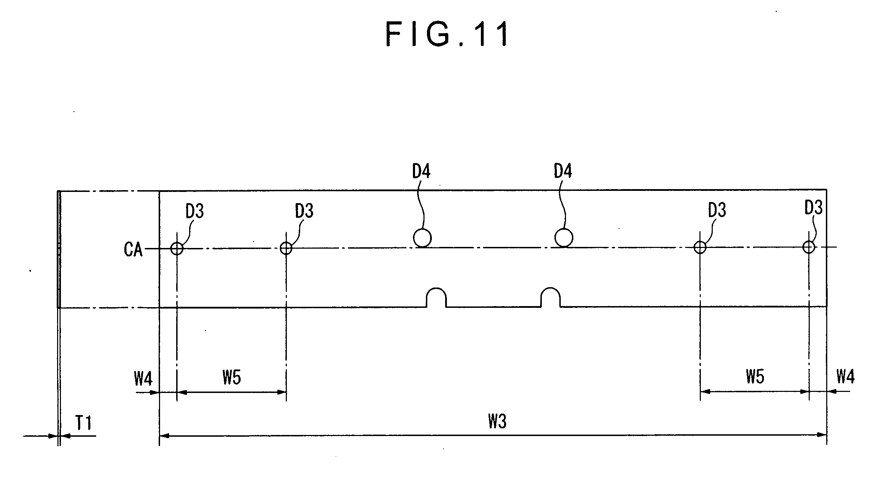

As shown in Fig. 11, the laminated plates 331 were each made from a steel plate processed into a shape having a thickness dimension T1 (= 0.6 mm), a width dimension W3 and a length dimension H2, the laminated plates 331 each including holes having a diameter D3 and formed at positions apart from the ends in the width direction of the laminated plate 331 by a dimension W4, W5.

(3) Dimensional Specification of Retainer Plate 332

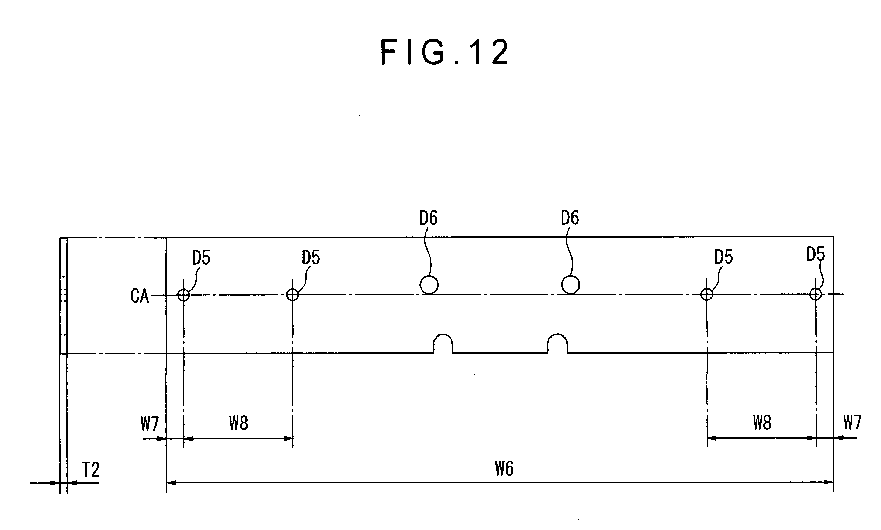

As shown in Fig. 12, the retainer plate 332 was made from a steel plate processed into a shape having a thickness dimension T2 (= 4.5 mm), a width dimension W6 and a length dimension H3, the retainer plate 332 including holes having a diameter D4 and formed at positions apart from the ends in the width direction of the retainer plate 332 by a dimension W7, W8.

(4) Dimensional Specification of Spacer 32

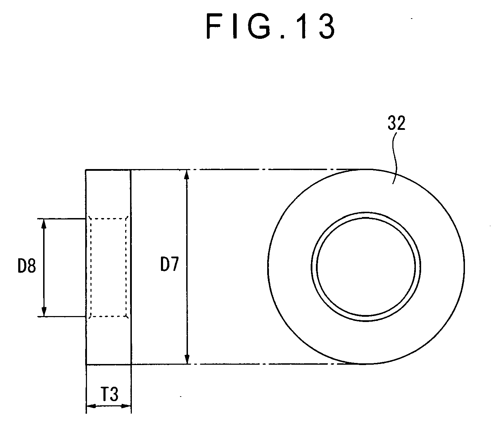

In Example 4, the spacers 32 were interposed on the connecting positions between the track links and the shoe plate main body 31 as in the first comparative example. As shown in Fig. 13, the spacers 32 were each formed in a cylindrical shape having an outer diameter D7 (= 44 mm), an inner diameter D8 (= 22.5 mm) and a thickness diameter T3 (= 11 mm). The outer diameter D7 of the spacers 32 was slightly smaller than the hole diameter D4 of the laminated plates 331 and than a hole diameter D5 of the retainer plate 332 as shown in Table 1 below. The thickness dimension T3 of the spacers 32 was larger than the total dimension of nine laminated plates 331 each having the above-described thickness T1 (i.e. 0.6 x 9 = 5.4 mm) and the thickness dimension T2 of the retainer plate 332 (= 4.5 mm). When the track links and the shoe plate main body 31 are connected by the bolts and nuts, lower surfaces of the track links abut on the spacers 32.
Examples 1 to 4 were set by changing the dimension from the ends in the width direction, the hole diameter and the like of the above-described shoe plate main body 31, laminated plates 331, retainer plate 332 and spacers 32. Table 1 shows the dimensions in Examples.
[Table 1]

| | | Example 1 | Example 2 | Example 3 | Example 4 |
|---|---|---|---|---|---|
| Shoe Plate Main Body | W0 (mm) | 910 | 910 | 910 | 910 |
| | W1 (mm) | 20 | 48 | 48 | 48 |
| | W2 (mm) | 150 | 140 | 140 | 140 |

| | D1 (mm) | 15 | 15 | 26 | 26 |
|---|---|---|---|---|---|
| | D2 (mm) | 26 | 26 | 26 | 26 |
| Laminated Plate | W3 (mm) | 900 | 860 | 860 | 860 |
| | W4 (mm) | 15 | 23 | 23 | 23 |
| | W5 (mm) | 150 | 140 | 140 | 190 |
| | D3 (mm) | 15 | 15 | 26 | 26 |
| | D4 (mm) | 26 | 26 | 26 | 45 |
| | T1 (mm) | 0.6 | 0.6 | 0.6 | 0.6 |
| Retainer Plate | W6 (mm) | 900 | 860 | 860 | 860 |
| | W7 (mm) | 15 | 23 | 23 | 23 |
| | W8 (mm) | 150 | 140 | 140 | 190 |
| | D5 (mm) | 15 | 15 | 26 | 26 |
| | D6 (mm) | 26 | 26 | 26 | 45 |
| | T2 (mm) | 4.5 | 4.5 | 4.5 | 4.5 |

In each Example, the shoe plate main body 31, the laminated plates 331 and the retainer plate 332 were integrated by the fastening members. Note that in Examples 1 and 2, the integration was conducted with the bolts and nuts of M12 by fastening at a fastening torque of 11 kg·m. On the other hand, in Examples 3 and 4, the integration was conducted with the bolts and nuts of M22 which is larger than that in Examples 1 and 2 by fastening at a fastening torque of 70 kg·m. In Example 4, the bolts and nuts of the shoe plate main body 31 and the track links were fastened at a torque of 0.35 kg·m and then further fastened by rotating the bolt head at 120 deg.

[Example 5]

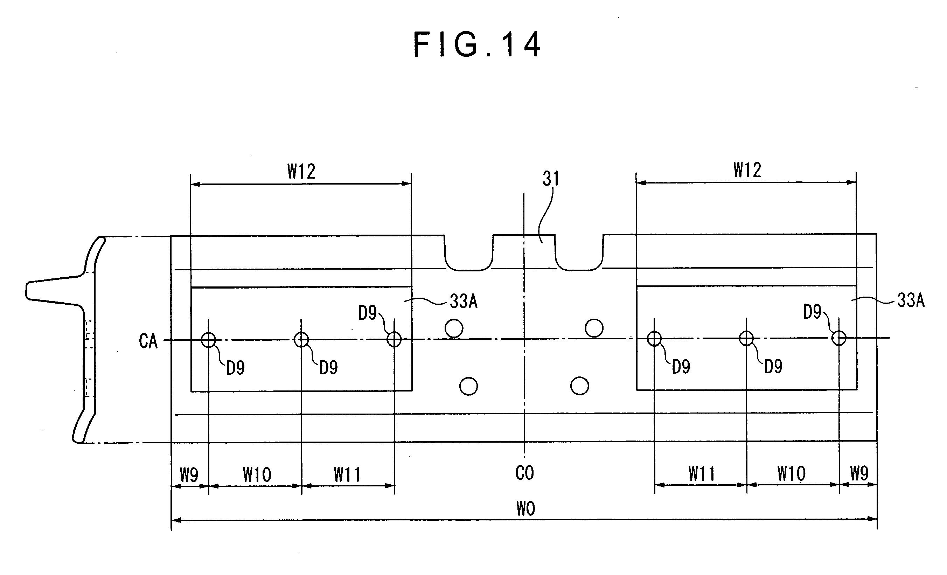

Example 5, which does not form part of the invention, employed the same arrangement as Example 1 in which the damping members 33A were provided on the shoe plate main body 31 at the ends of the shoe plate main body 31 as shown in Fig. 14.
The damping members 33A were disposed symmetrically about the axis line CO partitioning the width dimension W0 of the shoe plate main body 31. The holes having the diameter D9 for inserting the fastening members were set on the center axis CA extending in the width direction of the shoe plate main body 31 so as to be symmetric about the axis line CO. The thickness dimension of the laminated plates of the damping members 33A and the number of the laminated plates were the same as those in Examples 1 to 4. The thickness dimension of the retainer plate was also the same as that in Examples 1 to 4. Note that the dimensions in Fig. 14 according to Example 5 were W9 = 25 mm, W10 = 115 mm and W11 = 115 mm.

[Example 6]

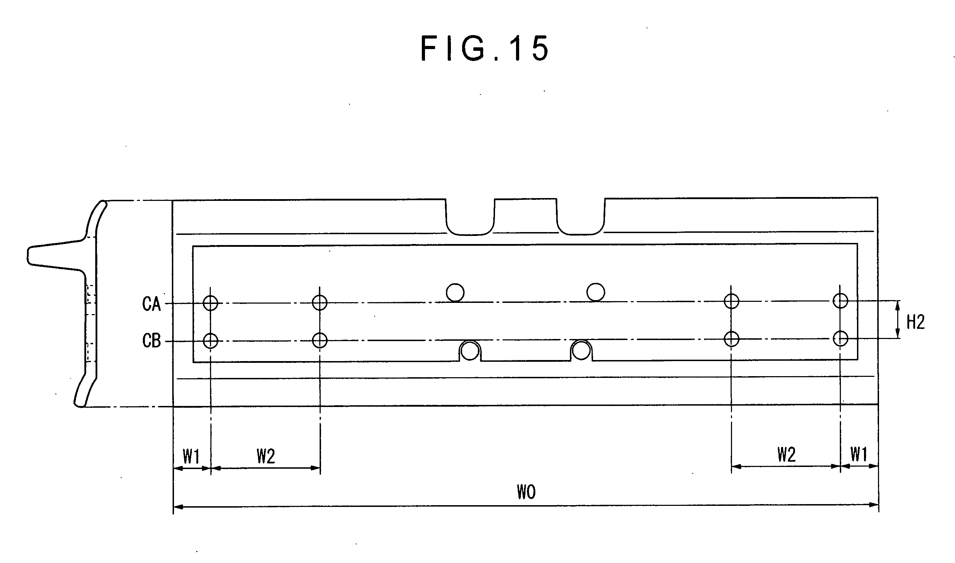

As shown in Fig. 15, in Example 6, the fastening members were set apart by the same dimensions W0, W1 and W2 in the width direction of the shoe plate main body 31. In Example 6, the fastening members were also set to be offset by the dimension H2 from the axis line CA extending at the middle of the length direction of the shoe plate main body 31 such that the fastening members were on the axis line CB. Note that the offset dimension was 80 mm and the damping member 33 was fastened at four positions on one side of the damping member 33.

[Comparison 1]

In Comparison 1, the shoe plate main body 31 described in the first comparative example was connected with the pair of track links, thereby assembling a part of the crawler belt 1. In other words, the spacers 32 and the damping member 33 described in the first embodiment were omitted in Comparison 1.

[Comparison 2]

In Comparison 2, the damping members 33A used in Example 5 were used and fixed on the shoe plate main body 31 by plug welding.

[Test Method]

A damping measurement and a noise measurement were conducted for a part of the crawler belt 1 assembled in Examples 1 to 5 and Comparisons 1 and 2 by using a damping noise testing device.

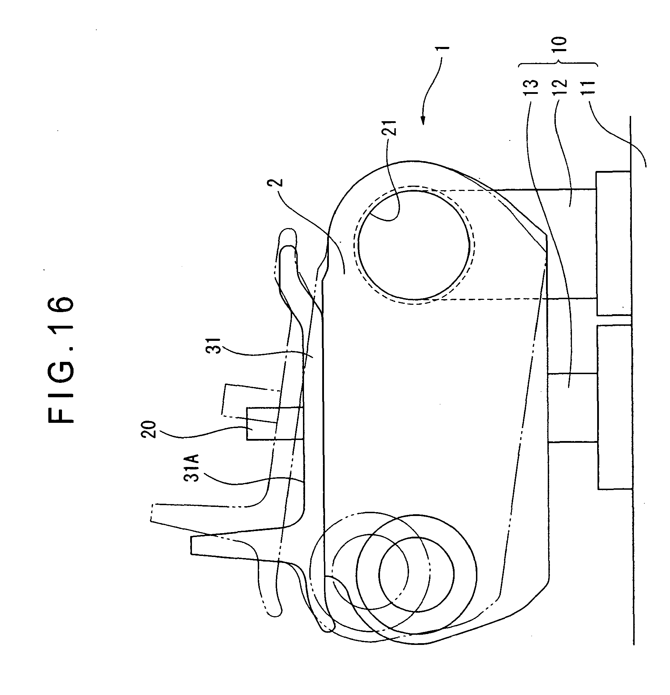

Fig. 16 is a side view schematically showing an arrangement of the damping noise testing device used in the damping measurement and the noise measurement.
As shown in Fig. 16, the damping noise testing device 10 included: a mounting base 11; a rotary supporting portion 12 mounted on the mounting base 11 and rotatably supporting a part of the crawler belt 1 via the circular holes 21 formed on one end side in the length direction of the pair of track links 2; and a test specimen 13 colliding with the pair of track links 2 when the part of the crawler belt 1 attached on the mounting base 11 rotates due to its self weight.
As shown in Fig. 16, an acceleration sensor 20 (manufactured by PCB Piezotronics, Inc., 303A02) was attached in advance on the ground engaging surface 31A side of the shoe plate main body 31 with the part of the crawler belt 1 according to Examples 1 to 4 and Comparisons 1 and 2 attached to the damping noise testing device 10.
In this state, the damping measurement was conducted in which the part of the crawler belt 1 was allowed to rotate due to its self weight from a position 10 mm above the test specimen 13 toward the test specimen 13, thereby making the pair of track links 2 collide with the test specimen 13. An acceleration in the collision was measured by the acceleration sensor 20.
In addition, the noise measurement was conducted at a position one meter above the shoe plate main body 31 using a noise level meter (not shown) (manufactured by LION CO., LTD., N-27) and a 1/3 octave-band analysis was conducted

[Test Results]

Table 2 shows results of maximum damping acceleration measurements measured by the acceleration sensor 20 in Example 1 to Comparison 2.
[Table 2]

| | Noise Level dB (A) | Reduction Effect dB (A) | Maximum Acceleration G |
|---|---|---|---|
| Example 1 | 86.5 | -11.6 | 61.4 |
| Example 2 | 88.8 | -9.3 | 60.9 |
| Example 3 | 88.1 | -10 | 73.2 |
| Example 4 | 85.8 | -12.3 | 62.6 |
| Example 5 | 93.4 | -4.7 | 84.9 |
| Example 6 | 89.5 | -11.6 | 75.5 |
| Comparison 1 | 98.1 | - | 171.4 |
| Comparison 2 | 92.4 | -5.7 | 106.4 |

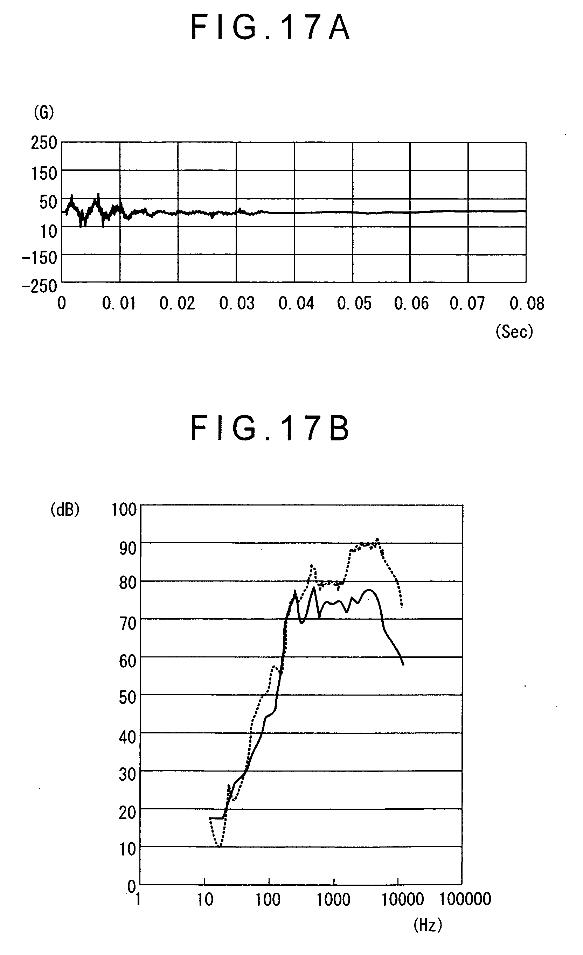

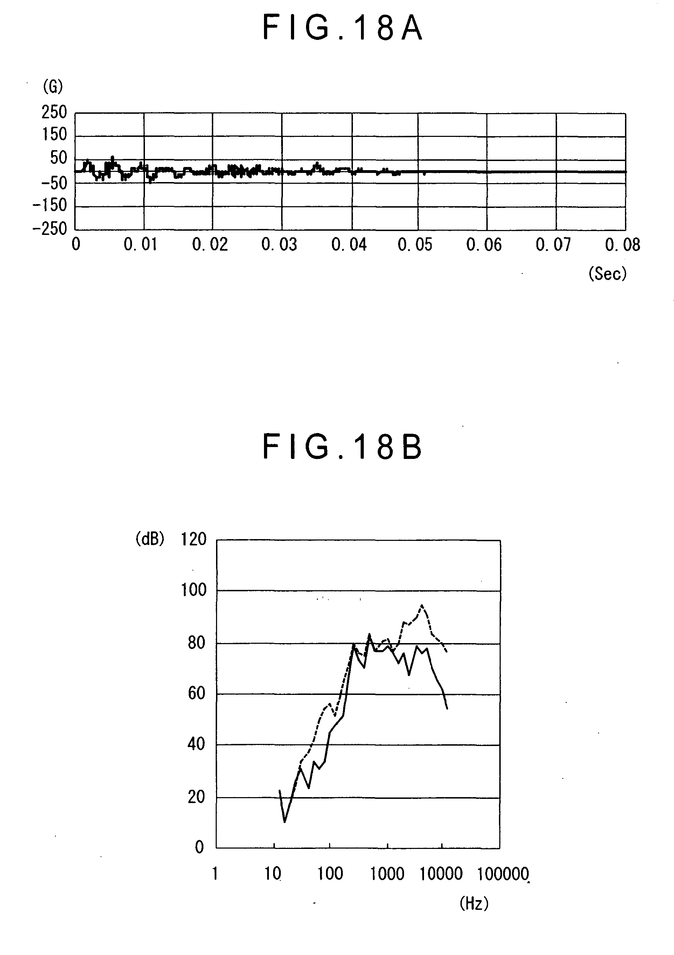

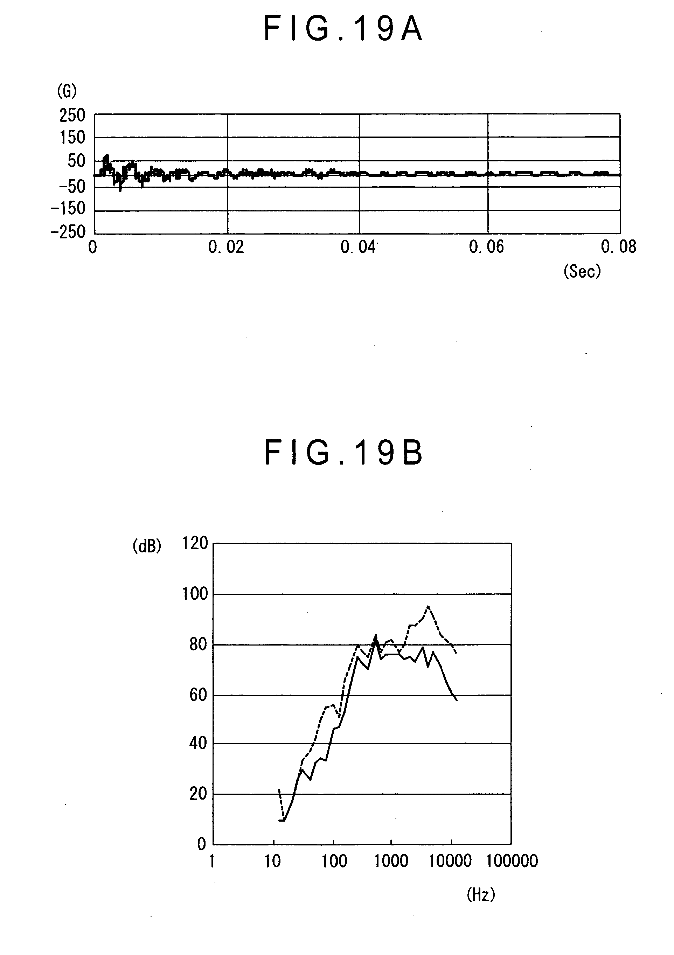

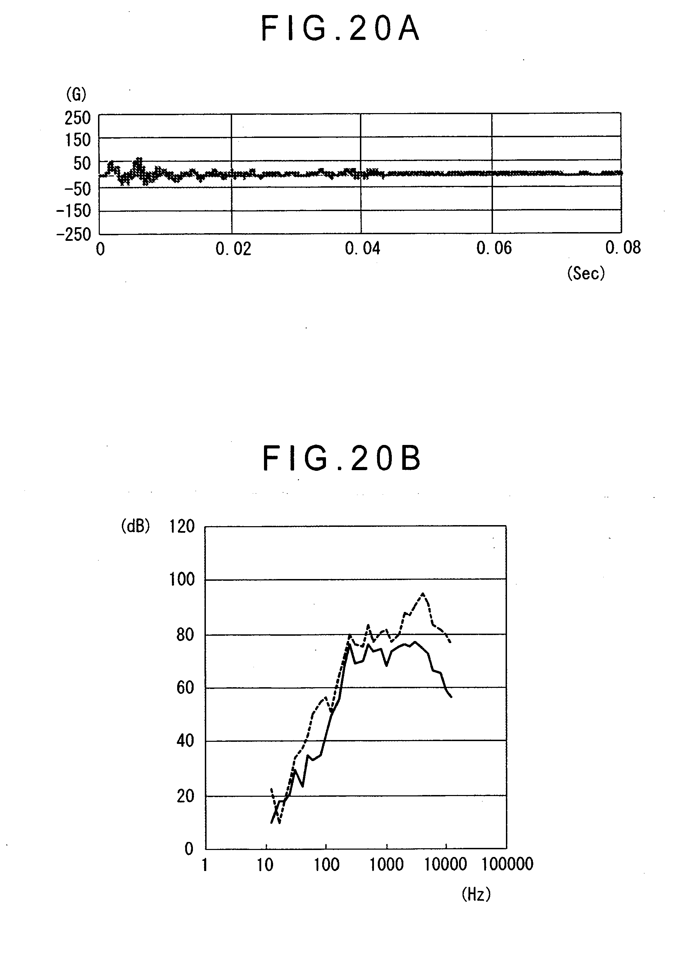

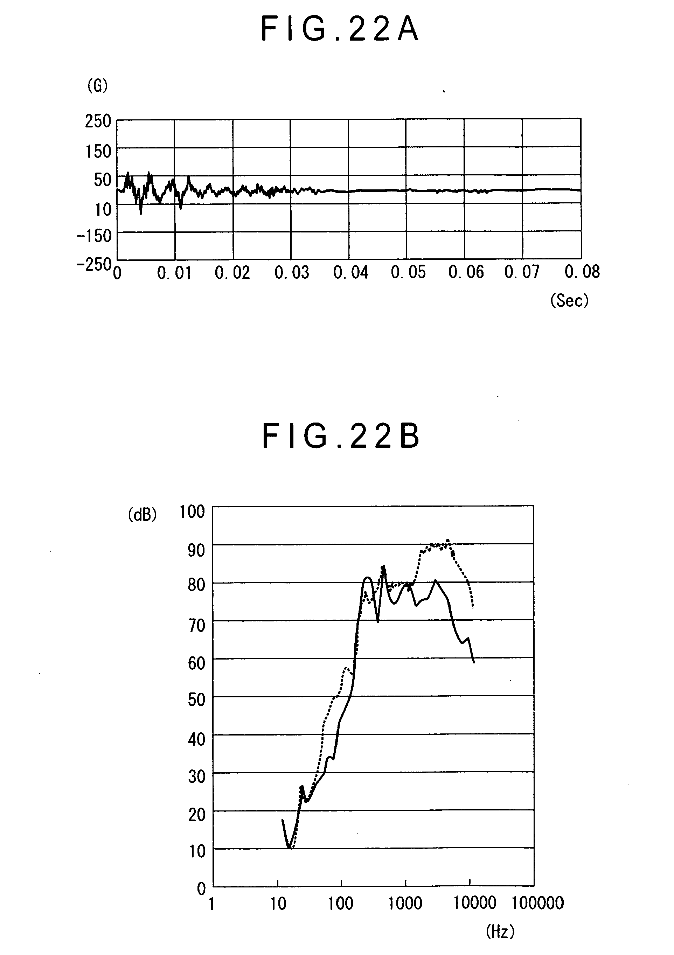

Fig. 17A shows change in time in damping acceleration in Example 1. Fig. 17B shows results of the 1/3 octave-band analysis in Example 1. Fig. 18A shows change in time in the damping acceleration in Example 2. Fig. 18B shows results of the 1/3 octave-band analysis in Example 2. Fig. 19A shows change in time in the damping acceleration in Example 3. Fig. 19B shows results of the 1/3 octave-band analysis in Example 3. Fig. 20A shows change in time in the damping acceleration in Example 4. Fig. 20B shows results in the 1/3 octave-band analysis in Example 4. Fig. 21A shows change in time in the damping acceleration in Example 5. Fig. 21B shows results in the 1/3 octave-band analysis in Example 5. Fig. 22A shows change in time in the damping acceleration in Example 4. Fig. 22B shows results in the 1/3 octave-band analysis in Example 4. In the results of the 1/3 octave-band analyses in Figs. 17B to 22B, the solid lines represent result data of Examples and the dotted lines represent 1/3 octave-band analysis data of Comparison 1. Fig. 23A shows change in time in the damping acceleration in Comparison 1. Fig. 23B shows results of the 1/3 octave-band analysis in Comparison 1. Fig. 24A shows change in time in the damping acceleration in Comparison 2. Fig. 24B shows results of the 1/3 octave-band analysis in Comparison 2.

[Examinations]

According to the 1/3 octave-band analysis results in Figs. 17B to 22B, a remarkable reduction in noise around 50 Hz to 100 Hz and in noise of high frequency of 200 Hz or higher was seen in Examples 1 to 6 as compared with the 1/3 octave-band analysis results in Comparison 1 shown in Fig. 22B. In short, it was confirmed that noise generated from the shoe plate was effectively dissipated by providing the damping members to the shoe plate main body.
As is obvious from Table 2, the noise level and the maximum acceleration were also remarkably reduced in any of Examples 1 to 6 as compared with those in Comparison 1, which sufficiently confirms the effects of the invention.

Next, in comparison with Comparison 2, reduction amounts in the noise level and the maximum acceleration in Examples 1 to 4 and 6 were larger than those in Comparison 2. From these values, it was confirmed that the damping members fixed by the fastening members such as the bolts and nuts could provide greater reduction effects than the damping members fixed by plug welding.
In Example 5, the noise level is higher than that in Comparison 2 as seen from Table 2. However, noise is actually recognized by perceiving all noise at noise levels of frequency bands obtained from the 1/3 octave-band analysis.

Accordingly, as an expedient way, the mathematic expression below was used for a calculation based on frequency bands and noise levels of the frequency bands:

$$\sum \text{(Center frequency of Frequency bands x Noise level) ... (a)}$$

Fig. 25 shows calculation results of (a) in 1600 Hz to 12500 Hz bands. Fig. 26 shows calculation results of (a) in 2500 Hz to 6300 Hz bands.
According to these results, not only in Examples 1 to 4 and 6 but also in Example 5, a greater reduction in the total level of 2500 Hz and higher bands can be seen as compared with Comparison 2, which confirms that Example 5 is more advantageous than Comparison 2 in terms of noise damping.

INDUSTRIAL APPLICABILITY

An aspect of the invention can be applied to a crawler-belt-type traveling device used in a work machine such as a crawler dozer.

## Claims

**1.** A crawler belt (1), comprising:

track links (2) connected in a looped manner; and
shoe plates (3,3A,3B,3C) connected to the track links, wherein
the crawler belt is to be wound around a driving wheel and an idle wheel of a traveling device, wherein
the shoe plates each include: a shoe plate (31) main body formed in a plate shape that extends in a width direction orthogonal to a connecting direction of the track links, the shoe plate main body having a connecting surface (31 B) on which the track links are connected, the connecting surface located at a substantially central portion of the shoe plate main body; a damping member (33,33A,33B) that includes laminated plates (331) laminated on the connecting surface and a retainer plate provided on the laminated plates; and first fastening members (6) that fasten the shoe plate main body, the laminated plates and the retainer plate while holding the laminated plates in a mutually slidable state, and
the track links (2) and the shoe plate main body (31) are connected by second fastening members being bolt members (4) penetrating the track links and the shoe plate main body;
and wherein
the laminated plates (331) and the retainer plate (332) each include a plate body that extends from a position near one end of the shoe plate main body in the width direction to a position near the other end, the laminated plates and the retainer plate being symmetric about a connecting position of the shoe plate main body to the track links; and
spacers (32) are disposed on the shoe plate (31) main body at the connecting position of the bolt members (4), the spacers (32) having a thickness larger than that of the damping member (33,33A,33B).

**2.** The crawler belt (1) according to claim 1, wherein
the first fastening members (6) are screw members that include an external thread penetrating the shoe plate main body (31), the laminated plates (331) and the retainer plate (332) and an internal thread screwed with the external thread, and
the shoe plate main body, the laminated plates and the retainer plate are provided with through holes at positions (P1,P2,P3,P4) in which the screw members penetrate, the through holes having a larger diameter than that of the external thread.

**3.** The crawler belt (1) according to claim 1, wherein
the first fastening members (6) are disposed on an axis line (CA) extending along a width direction end of the laminated plate (331) and on axis lines (A1,A2,A3,A4) extending so as to substantially equally partition the laminated plate (331) in a width direction into three parts.

**4.** The crawler belt (1) according to claim 3, wherein
the first fastening members (6) are disposed on a substantially central portion in the connecting direction of the shoe plate main body (31) and on a center axis line extending in the width direction of the shoe plate main body.

**5.** An assembly comprising a shoe plate (3) and a pair of track links (2) of a crawler belt (1), the shoe plate being connected to the track links (2), the track links being connectable to further track links (2) in a looped manner, the shoe plate including: a shoe plate main body (31) formed in a plate shape that extends in a width direction orthogonal to a connecting direction of the track links, the shoe plate main body having a connecting surface (31B) on which the track links are connected, the connecting surface located at a substantially central portion of the shoe plate main body;
the assembly further comprising a damping member (33,33A,33B) that includes laminated plates (331) laminated on the connecting surface and a retainer plate (332) provided on the laminated plates; and first fastening members (6) that connect the shoe plate main body, the laminated plates and the retainer plate while holding the laminated plates in a mutually slidable state the track links (2) and the shoe plate main body (31) being connected by second fastening members being bolt members (4) penetrating the track links and the shoe plate main body;
wherein
the laminated plates (331) and the retainer plate (332) each include a plate body that extends from a position near one end of the shoe plate main body in the width direction to a position near the other end, the laminated plates and the retainer plate being symmetric about a connecting position of the shoe plate main body to the track links; and spacers (32) being disposed on the shoe plate main body (31) at the connecting position of the bolt members (4), the spacers having a thickness larger than that of the damping member (33,33A,33B).

**6.** The assembly according to claim 5, wherein
the first fastening members are screw members that include an external thread penetrating the shoe plate main body, the laminated plates and the retainer plate and an internal thread screwed with the external thread, and
the shoe plate main body, the laminated plates and the retainer plate are provided with through holes at positions in which the screw members penetrate, the through hole having a larger diameter than that of the external thread.

**7.** The assembly according to claim 6, wherein
the first fastening members (6) are disposed on an axis line (CA) extending along a width direction end of the laminated plate and on axis lines (A1,A2,A3,A4) extending so as to substantially equally partition the laminated plate (331) in a width direction into three parts.

**8.** The assembly according to claim 7, wherein
the first fastening members (6) are disposed on a substantially central portion in the connecting direction of the shoe plate main body (31) and on a center axis line extending in the width direction of the shoe plate main body.

**Patentansprüche**

**1.** Raupenkette (1), Folgendes umfassend:

Verbindungsglieder (2), die zu einer Schleife verbunden sind, und
Laufflächenglieder (3, 3A, 3B, 3C), die mit den Verbindungsgliedern verbunden sind, wobei
die Raupenkette um ein Antriebsrad und ein Umlenkrad einer fahrenden Vorrichtung gewunden sein soll, wobei die Laufflächenglieder jeweils Folgendes beinhalten: einen Laufflächenglied-Hauptkörper (31), der in einer Plattenform gebildet ist und sich in einer Breiterichtung rechtwinklig zu einer Verbindungsrichtung der Verbindungsglieder erstreckt, wobei der Laufflächenglied-Hauptkörper eine Verbindungsfläche (31 B) aufweist, mit der die Verbindungsglieder verbunden sind, wobei die Verbindungsfläche an einem im Wesentlichen mittleren Abschnitt des Laufflächenglied-Hauptkörpers positioniert ist, ein Dämpfungselement (33, 33A, 33B), das laminierte Platten (331), die an die Verbindungsfläche laminiert sind, und eine Halteplatte, die an den laminierten Platten bereitgestellt ist, beinhaltet, und erste Befestigungselemente (6), die den Laufflächenglied-Hauptkörper, die laminierten Platten und die Halteplatte befestigen, während sie die laminierten Platten in einem beidseitig gleitfähigen Zustand halten, und
die Verbindungsglieder (2) und der Laufflächenglied-Hauptkörper (31) durch zweite Befestigungselemente verbunden sind, die Bolzenelemente (4) sind, welche die Verbindungsglieder und den Laufflächenglied-Hauptkörper durchdringen,
und wobei
die laminierten Platten (331) und die Halteplatte (332) jeweils einen Plattenkörper beinhalten, der sich in der Breiterichtung von einer Position nahe einem Ende des Laufflächenglied-Hauptkörpers zu einer Position nahe dem anderen Ende erstreckt, wobei die laminierten Platten und die Halteplatte symmetrisch um eine Verbindungsposition des Laufflächenglied-Hauptkörpers und der Verbindungsglieder liegen, und
Abstandshalter (32) an der Verbindungsposition der Bolzenelemente (4) am Laufflächenglied-Hauptkörper (31) angeordnet sind, wobei die Abstandshalter (32) eine größere Dicke als das Dämpfungselement (33, 33A, 33B) aufweisen.

2. Raupenkette (1) nach Anspruch 1, wobei
die ersten Befestigungselemente (6) Schraubenelemente sind, die ein Außengewinde beinhalten, das den Laufflächenglied-Hauptkörper (31), die laminierten Platten (331) und die Halteplatte (332) durchdringt, und ein Innengewinde, das mit dem Außengewinde verschraubt ist, und
der Laufflächenglied-Hauptkörper, die laminierten Platten und die Halteplatte an Positionen (P1, P2, P3, P4) mit Durchgangsöffnungen versehen sind, in welche die Schraubenelemente eindringen, wobei die Durchgangsöffnungen einen größeren Durchmesser als das Außengewinde aufweisen.

3. Raupenkette (1) nach Anspruch 1, wobei
die ersten Befestigungselemente (6) an einer Achslinie (CA) angeordnet sind, die sich entlang eines Breiterichtungsendes der laminierten Platte (331) erstreckt, und an Achslinien (A1, A2, A3, A4), die sich derart erstrecken, dass sie die laminierte Platte (331) in einer Breiterichtung im Wesentlichen gleichmäßig in drei Teile teilen.

4. Raupenkette (1) nach Anspruch 3, wobei
die ersten Befestigungselemente (6) in Verbindungsrichtung des Laufflächenglied-Hauptkörpers (31) an einem im Wesentlichen mittleren Abschnitt und an einer Mittelachslinie, die sich in Breiterichtung des Laufflächenglied-Hauptkörpers erstreckt, angeordnet sind.

5. Anordnung, ein Laufflächenglied (3) und ein Paar Verbindungsglieder (2) einer Raupenkette (1) umfassend, wobei das Laufflächenglied mit den Verbindungsgliedern (2) verbunden ist, die Verbindungsglieder mit weiteren Verbindungsgliedern (2) zu einer Schleife verbunden werden können, das Laufflächenglied Folgendes beinhaltet:

einen Laufflächenglied-Hauptkörper (31), der in einer Plattenform gebildet ist und sich in einer Breiterichtung rechtwinklig zu einer Verbindungsrichtung der Verbindungsglieder erstreckt, wobei der Laufflächenglied-Hauptkörper eine Verbindungsfläche (31 B) aufweist, mit der die Verbindungsglieder verbunden sind, wobei die Verbindungsfläche an einem im Wesentlichen mittleren Abschnitt des Laufflächenglied-Hauptkörpers positioniert ist,
wobei die Anordnung ferner ein Dämpfungselement (33, 33A, 33B) umfasst, das laminierte Platten (331), die an die Anschlussfläche laminiert sind, und eine Halteplatte (332), die an den laminierten Platten bereitgestellt ist, beinhaltet, und erste Befestigungselemente (6), die den Laufflächenglied-Hauptkörper, die laminierten Platten und die Halteplatte verbinden, während sie die laminierten Platten in einem beidseitig gleitfähigen Zustand halten, wobei die Verbindungsglieder (2) und der Laufflächenglied-Hauptkörper (31) durch zweite Befestigungselemente verbunden sind, die Bolzenelemente (4) sind, welche die Verbindungsglieder und den Laufflächenglied-Hauptkörper durchdringen,

wobei
die laminierten Platten (331) und die Halteplatte (332) jeweils einen Plattenkörper beinhalten, der sich in der Breiterichtung von einer Position nahe einem Ende des Laufflächenglied-Hauptkörpers zu einer Position nahe dem anderen Ende erstreckt, wobei die laminierten Platten und die Halteplatte symmetrisch um eine Verbindungsposition des Laufflächenglied-Hauptkörpers und der Verbindungsglieder liegen, und
Abstandshalter (32) an der Verbindungsposition der Bolzenelemente (4) am Laufflächenglied-Hauptkörper (31) positioniert sind, wobei die Abstandshalter eine größere Dicke als das Dämpfungselement (33, 33A, 33B) aufweisen.

**6.** Anordnung nach Anspruch 5, wobei
die ersten Befestigungselemente Schraubenelemente sind, die ein Außengewinde beinhalten, das den Laufflächenglied-Hauptkörper, die laminierten Platten und die Halteplatte durchdringt, und ein Innengewinde, das mit dem Außengewinde verschraubt ist, und
der Laufflächenglied-Hauptkörper, die laminierten Platten und die Halteplatte an Positionen mit Durchgangsöffnungen versehen sind, in welche die Schraubenelemente eindringen, wobei die Durchgangsöffnungen einen größeren Durchmesser als das Außengewinde aufweisen.

**7.** Anordnung nach Anspruch 6, wobei
die ersten Befestigungselemente (6) an einer Achslinie (CA) angeordnet sind, die sich entlang eines Breiterichtungsendes der laminierten Platte erstreckt, und an Achslinien (A1, A2, A3, A4), die sich derart erstrecken, dass sie die laminierte Platte (331) in einer Breiterichtung im Wesentlichen gleichmäßig in drei Teile teilen.

**8.** Anordnung nach Anspruch 7, wobei
die ersten Befestigungselemente (6) in Verbindungsrichtung des Laufflächenglied-Hauptkörpers (31) an einem im Wesentlichen mittleren Abschnitt und an einer Mittelachslinie, die sich in Breiterichtung des Laufflächenglied-Hauptkörpers erstreckt, angeordnet sind.

## Revendications

**1.** Train de chenille (1), comprenant :

des maillons de chenille (2) raccordés à la façon d'une boucle ; et
des patins (3, 3A, 3B, 3C) raccordés aux maillons de chenille, dans lequel
le train de chenille doit être enroulé autour d'une roue d'entraînement et d'une roue folle d'un appareil de déplacement, dans lequel
les patins comprennent chacun : un corps principal de patin (31) formé dans une forme de plaque qui s'étend dans une direction de la largeur orthogonale à une direction de raccordement des maillons de chenille, le corps principal de patin ayant une surface de raccordement (31 B) sur laquelle les maillons de chenille sont raccordés, la surface de raccordement étant située au niveau d'une portion sensiblement centrale du corps principal de patin ; un organe amortisseur (33, 33A, 33B) qui comprend des plaques stratifiées (331) stratifiées sur la surface de raccordement et une plaque de retenue agencée sur les plaques stratifiées ; et des premiers organes de fixation (6) qui fixent le corps principal de patin, les plaques stratifiées et la plaque de retenue tout en maintenant les plaques stratifiées dans un état mutuellement coulissant, et
les maillons de chenille (2) et le corps principal de patin (31) sont raccordés par des seconds organes de fixation qui sont des organes de boulon (4) pénétrant dans les maillons de chenille et le corps principal de patin ;
et dans lequel
les plaques stratifiées (331) et la plaque de retenue (332) comprennent chacune un corps de plaque qui s'étend d'une position à proximité d'une extrémité du corps principal de patin dans la direction de la largeur à une position à proximité de l'autre extrémité, les plaques stratifiées et la plaque de retenue étant symétriques autour d'une position de raccordement du corps principal de patin aux maillons de chenille ; et
des entretoises (32) sont disposées sur le corps principal de patin (31) au niveau de la position de raccordement des organes de boulon (4), les entretoises (32) ayant une épaisseur supérieure à celle de l'organe amortisseur (33, 33A, 33B).

**2.** Train de chenille (1) selon la revendication 1, dans lequel
les premiers organes de fixation (6) sont des organes de vis qui comprennent un filetage externe pénétrant dans le corps principal de patin (31), les plaques stratifiées (331) et la plaque de retenue (332) et un filetage interne vissé avec le filetage externe, et
le corps principal de patin, les plaques stratifiées et la plaque de retenue sont dotées de trous traversants au niveau de positions (P1, P2, P3, P4) dans lesquels les organes de vis pénètrent, les trous traversants ayant un diamètre plus grand que celui du filetage externe.

**3.** Train de chenille (1) selon la revendication 1, dans lequel
les premiers organes de fixation (6) sont disposés sur une ligne d'axe (CA) s'étendant le long d'une extrémité dans la direction de la largeur de la plaque stratifiée (331) et sur des lignes d'axe (A1, A2, A3, A4) s'étendant de façon à séparer de façon sensiblement égale la plaque stratifiée (331) dans une direction de la largeur en trois parties.

**4.** Train de chenille (1) selon la revendication 3, dans lequel
les premiers organes de fixation (6) sont disposés sur une portion sensiblement centrale dans la direction de raccordement du corps principal de patin (31) et sur une ligne d'axe central s'étendant dans la direction de la largeur du corps principal de patin.

**5.** Ensemble comprenant un patin (3) et une paire de maillons de chenille (2) d'un train de chenille (1), le patin étant raccordé aux maillons de chenille (2), les maillons de chenille pouvant être raccordés à des maillons de chenille supplémentaires (2) à la façon d'une boucle, le patin comprenant : un corps principal de patin (31) formé dans une forme de plaque qui s'étend dans une direction de la largeur orthogonale à une direction de raccordement des maillons de chenille, le corps principal de patin ayant une surface de raccordement (31 B) sur laquelle les maillons de chenille sont raccordés, la surface de raccordement étant située au niveau d'une portion sensiblement centrale du corps principal de patin ;
l'ensemble comprenant en outre un organe amortisseur (33, 33A, 33B) qui comprend des plaques stratifiées (331) stratifiées sur la surface de raccordement et une plaque de retenue (332) agencée sur les plaques stratifiées ; et des premiers organes de fixation (6) qui raccordent le corps principal de patin, les plaques stratifiées et la plaque de retenue tout en maintenant les plaques stratifiées dans un état mutuellement coulissant ; les maillons de chenille (2) et le corps principal de patin (31) étant raccordés par des seconds organes de fixation qui sont des organes de boulon (4) pénétrant dans les maillons de chenille et le corps principal de patin ;
dans lequel
les plaques stratifiées (331) et la plaque de retenue (332) comprennent chacune un corps de plaque qui s'étend d'une position à proximité d'une extrémité du corps principal de patin dans la direction de la largeur à une position à proximité de l'autre extrémité, les plaques stratifiées et la plaque de retenue étant symétriques autour d'une position de raccordement du corps principal de patin aux maillons de chenille ; et
des entretoises (32) disposées sur le corps principal de patin (31) au niveau de la position de raccordement des organes de boulon (4), les entretoises ayant une épaisseur supérieure à celle de l'organe amortisseur (33, 33A, 33B).

**6.** Ensemble selon la revendication 5, dans lequel
les premiers organes de fixation sont des organes de vis qui comprennent un filetage externe pénétrant dans le corps principal de patin, les plaques stratifiées et la plaque de retenue et un filetage interne vissé avec le filetage externe, et
le corps principal de patin, les plaques stratifiées et la plaque de retenue sont dotés de trous traversants au niveau de positions dans lesquels les organes de vis pénètrent, le trou traversant ayant un diamètre plus grand que celui du filetage externe.

**7.** Ensemble selon la revendication 6, dans lequel
les premiers organes de fixation (6) sont disposés sur une ligne d'axe (CA) s'étendant le long d'une extrémité dans la direction de la largeur de la plaque stratifiée et sur des lignes d'axe (A1, A2, A3, A4) s'étendant de façon à séparer de façon sensiblement égale la plaque stratifiée (331) dans une direction de la largeur en trois parties.

**8.** Ensemble selon la revendication 7, dans lequel
les premiers organes de fixation (6) sont disposés sur une portion sensiblement centrale dans la direction de raccordement du corps principal de patin (31) et sur une ligne d'axe central s'étendant dans la direction de la largeur du corps principal de patin.

FIG.1

1
3
6
3
6
22
21
21
22
21
2
2
21
22
21
22
6
21
22
6
21
6
6

FIG.2

1
2
3
6
22
21
21
23
5
5
6
31
33
32
330
32
330
32
312
330
32
330
6
6
31B
31A
311
4
4

FIG.3
3
31B
P1
31
6
A1
33
6
P4
A4
312
330
312
330
C0
312
330
312
330
6
A3
P3
IV
IV
P2
6
A2
CA

FIG. 4

3
33
31

FIG. 5

6
61
332
33
331
31
62

FIG. 6

1
3
3
7
7
7
7
22
21
21
22
21
2
2
21
21
22
7
21
22
7
21
7
7
7
7

F I G . 7
3A
31B
31
7
P5
33A
P6
P7
C0
312
CA

FIG.8

1B
3
2
22
21
6
21
31
23
5
5
33
6
312B
312B
6
6
31B
31A
311
4
4

FIG.9
3B
31B
31
33
P1
P1A
A1
P4
P4A
A4
C0
P3
P3A
A3
P2
P2A
A2
CA
CB

H0
D1
W1
W2
D2
W0
H1
31
CA

FIG.10

FIG.11
W4
D3
W5
D3
D4
D4
W3
D3
W5
D3
W4
CA
T1

FIG. 12

W7
D5
W8
D5
D6
W6
D6
D5
W8
D5
W7
CA
T2

FIG.13

32
D8
D7
T3

FIG. 14

FIG. 15

H2
W1
W2
W0
W2
W1
CA
CB

FIG.16
1
2
21
31
20
31A
13
12
11
10

# FIG.17A

(G)
250
150
50
10
-150
-250
0
0.01
0.02
0.03
0.04
0.05
0.06
0.07
0.08
(Sec)

# FIG.17B

(dB)
100
90
80
70
60
50
40
30
20
10
0
1
10
100
1000
10000
100000
(Hz)

# FIG. 18A

(G)
250
150
50
-50
-150
-250
0
0.01
0.02
0.03
0.04
0.05
0.06
0.07
0.08
(Sec)

# FIG. 18B

(dB)
120
100
80
60
40
20
0
1
10
100
1000
10000
100000
(Hz)

# FIG. 19A

(G)
250
150
50
-50
-150
-250
0
0. 02
0. 04
0. 06
0. 08
(Sec)


# FIG. 19B

(dB)
120
100
80
60
40
20
0
1
10
100
1000
10000
100000
(Hz)

# FIG.20A

(G)
250
150
50
-50
-150
-250
0
0.02
0.04
0.06
0.08
(Sec)

# FIG.20B

(dB)
120
100
80
60
40
20
0
1
10
100
1000
10000
100000
(Hz)

# FIG.21A

(G)
250
150
50
10
-150
-250
0
0.01
0.02
0.03
0.04
0.05
0.06
0.07
0.08
(Sec)

# FIG.21B

(dB)
100
90
80
70
60
50
40
30
20
10
0
1
10
100
1000
10000
100000
(Hz)

FIG.22A

(G)
250
150
50
10
-150
-250
0
0.01
0.02
0.03
0.04
0.05
0.06
0.07
0.08
(Sec)

FIG.22B

(dB)
100
90
80
70
60
50
40
30
20
10
0
1
10
100
1000
10000
100000
(Hz)

# FIG.23A

(G)
250
150
50
10
-150
-250
0
0.01
0.02
0.03
0.04
0.05
0.06
0.07
0.08
(Sec)

# FIG.23B

(dB)
100
90
80
70
60
50
40
30
20
10
0
1
10
100
1000
10000
100000
(Hz)

FIG.24A

(G)
250
150
50
10
-150
-250
0
0.01
0.02
0.03
0.04
0.05
0.06
0.07
0.08
(Sec)

FIG.24B

(dB)
100
90
80
70
60
50
40
30
20
10
0
1
10
100
1000
10000
100000
(Hz)

FIG.25
COMPARISON 1
COMPARISON 2
EXAMPLE 4
EXAMPLE 2
EXAMPLE 5
EXAMPLE 6
EXAMPLE 1
EXAMPLE 3
400000
350000
300000
250000
200000
150000
100000
50000
0
dB*Hz
84
86
88
90
92
94
96
98
100
dB

FIG.26
dB*Hz
1000000
900000
800000
700000
600000
500000
400000
300000
200000
100000
0
84
86
88
90
92
94
96
98
100
dB
COMPARISON 1
COMPARISON 2
EXAMPLE 5
EXAMPLE 6
EXAMPLE 2
EXAMPLE 3
EXAMPLE 1
EXAMPLE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 200219168 A
- US 6332509 B1
- JP 200219168 B